# EUROPEAN PATENT APPLICATION

(11) **EP 1 640 883 A2**
(43) Date of publication of application: **29.03.2006**
(21) Application number: 05256022.4
(22) Date of filing: 27.09.2005
(51) Int. Cl.: G06F 17/30

(54) **Information processing system and method, information processing apparatus and method, and program**

(30) Priority: 28.09.2004 JP 2004281485
(71) Applicant: SONY CORPORATION, Tokyo 141 (JP)
(72) Inventor: Sato, Masahiko c/o Sony Corporation, Tokyo 141 (JP)
(74) Representative: Mills, Julia

(57) **Abstract**

An information processing system includes a first information processing apparatus for transmitting a broadcast program and broadcast data; a second information processing apparatus for generating and outputting electronic program guide (EPG) information about the broadcast program transmitted from the first information processing apparatus; and a third information processing apparatus for performing processing that uses at least one of the broadcast program, the broadcast data, the broadcast program and the broadcast data being transmitted from the first information processing apparatus, and the EPG information output from the second information processing apparatus. The second information processing apparatus includes a first extraction device; an EPG information generation device; and an output device. The third information processing apparatus includes a storage device; a receiving device; a second extraction device; and a specifying device.

## Description

The present invention contains subject matter related to Japanese Patent Application JP 2004-281485 filed in the Japanese Patent Office on September 28, 2004.

The present invention relates to the field of an information processing system and method, an information processing apparatus and method, and a program. More particularly, illustrative embodiments of the present invention relate to an information processing system and method capable of reliably linking a broadcast station indicated by electronic program guide (EPG) information to a channel (frequency) of broadcast waves that are actually received by a tuner, an information processing apparatus and method for use therewith, and a program for use therewith.

In recent years, the popularity of information processing apparatuses capable of receiving broadcast waves from a broadcast station and capable of playing back and recording broadcast programs and broadcast data contained in the broadcast waves has been remarkable. More recently, information processing apparatuses capable of performing various kinds of processing using information for constructing an EPG of broadcast programs have appeared. Hereinafter, information for constructing an EPG will be referred to collectively as "EPG information".

However, in order to perform various kinds of processing using such EPG information, a link between a broadcast station indicated by EPG information and a channel (frequency) of broadcast waves that are actually received by a tuner of an information processing apparatus (hereinafter referred to simply as a "link between EPG information and a receiving channel") becomes necessary. The phrase "link between EPG information and a receiving channel" refers to, for example, that, from which broadcast station indicated by EPG information the broadcast waves that are actually received at a predetermined channel (hereinafter referred to as a "receiving channel") by a tuner of an information processing apparatus are broadcast is specified, and the three parties, that is, the receiving channel, the EPG information, and the specified broadcast station, are made to correspond to one another.

More specifically, for example, according to Table 11 of "ETSIEN300 707 V1.2.1 (2003-04)", [online], [searched on September 20, 2004], Internet, <URL :http://www.etsi.org> in EN300 707, which is a standard system in Europe, the description of the broadcast station is connected to CNI (Country and Network Identifier) in the Application Information. CNI, as described in "ETSI EN 300 707 V1.2.1 (2003-04)" and "TR 101 231 "EBU web version" (2003-10)", [online], [searched on September 20, 2004], Internet, <URL :http://www.etsi.org>, refers to that which is contained in Packet 8/30 format 2, defined by a teletext signal and that in which a unique ID managed in Europe is assigned to each broadcast station. As a result of embedding CNI in the broadcast waves, the information processing apparatus on the receiving side is able to specify the broadcast station that has broadcast the broadcast waves. Furthermore, as a result of embedding CNI in the EPG information similarly to the broadcast waves, it is also possible for the information processing apparatus to specify the broadcast station indicated by the EPG.

Therefore, the information processing apparatus in Europe is able to perform the "link between EPG information and the receiving channel" by checking CNI contained in the EPG information against CNI contained in the broadcast waves (received signal) received by the receiving channel and by specifying the broadcast station to which the CNI is assigned by referring to the Application Information.

However, among the broadcast stations in Europe, there are broadcast stations that do not transmit CNI, and thus, it is difficult to automatically make the "link between EPG information and the receiving channel" to such a broadcast station. The term "automatically" refers to, for example, that the information processing apparatus performs processing by its own determination without the intervention of user operation. The user operation as referred to herein does not contain a trigger input operation, such as a starting instruction.

Also, in areas other than Europe, when data, such as CNI capable of specifying a broadcast station, is neither contained in the broadcast waves nor in the EPG information, the above-described problems will arise exactly in a similar manner.

The present invention has been made in view of such circumstances. It is desirable to reliably perform the "link between EPG information and the receiving channel".

Various respective aspects of the present invention are set out in the appended claims.

According to an embodiment of the present invention, there is provided an information processing system including a first information processing apparatus for transmitting a broadcast program and broadcast data; a second information processing apparatus for generating and outputting electronic program guide (EPG) information about the broadcast program transmitted from the first information processing apparatus; and a third information processing apparatus for performing processing that uses at least one of the broadcast program, the broadcast data, the broadcast program and the broadcast data being transmitted from the first information processing apparatus, and the EPG information output from the second information processing apparatus. In more detail, in this information processing system, the second information processing apparatus includes first extraction means for extracting, from within the first broadcast data transmitted from the first information processing apparatus, first part data capable of specifying a first broadcast station for managing the first information processing apparatus; EPG information generation means for generating EPG information containing the first part data extracted by the first extraction means; and output means for outputting the EPG information generated by the EPG information generation means. The third information processing apparatus includes storage means for storing the EPG information output from the second information processing apparatus; receiving means for receiving second broadcast data transmitted using a predetermined channel; second extraction means for extracting, from within the second broadcast data received by the receiving means, second part data capable of specifying a second broadcast station that has transmitted the second broadcast data; and specifying means for specifying whether or not the second broadcast station to which the channel used to transmit the second broadcast data is assigned is the first broadcast station corresponding to the EPG information by comparing the second part data extracted by the second extraction means with the first part data contained in the EPG information stored in the storage means.

According to another embodiment of the present invention, there is provided an information processing method for use with an information processing system including a first information processing apparatus for transmitting a broadcast program and broadcast data; a second information processing apparatus for generating and outputting EPG information about the broadcast program transmitted from the first information processing apparatus; and a third information processing apparatus for performing processing that uses at least one of the broadcast program, the broadcast data, the broadcast program and the broadcast data being transmitted from the first information processing apparatus, and the EPG information output from the second information processing apparatus. In more detail, the information processing method according to the embodiment of the present invention includes the steps of: extracting by the second information processing apparatus first part data within the first broadcast data transmitted from the first information processing apparatus, the first part data capable of specifying a first broadcast station for managing the first information processing apparatus; generating and outputting by the second information processing apparatus EPG information containing the extracted first part data; storing by the third information processing apparatus the EPG information output from the second information processing apparatus; receiving by the third information processing apparatus second broadcast data transmitted using a predetermined channel; extracting by the third information processing apparatus, from within the received second broadcast data, second part data capable of specifying a second broadcast station that has transmitted the second broadcast data; and specifying by the third information processing apparatus whether or not the second broadcast station to which the channel used to transmit the second broadcast data is assigned is the first broadcast station corresponding to the EPG information by comparing the second extracted part data with the first part data contained in the stored EPG information.

In the information processing system and method according to the embodiment of the present invention, the following processing is performed by the information processing system including a first information processing apparatus for transmitting a broadcast program and broadcast data; a second information processing apparatus for generating and outputting EPG information about the broadcast program transmitted from the first information processing apparatus; and a third information processing apparatus for performing processing that uses at least one of the broadcast program, the broadcast data, the broadcast program and the broadcast data being transmitted from the first information processing apparatus, and the EPG information output from the second information processing apparatus. That is, the second information processing apparatus extracts first part data within the first broadcast data transmitted from the first information processing apparatus, the first part data capable of specifying a first broadcast station for managing the first information processing apparatus, and generates and outputs EPG information containing the extracted first broadcast data. Then, the third information processing apparatus stores the EPG information output from the second information processing apparatus, receives second broadcast data transmitted using a predetermined channel, extracts, from within the received second broadcast data, second part data capable of specifying a second broadcast station that has transmitted the second broadcast data, and compares the second extracted part data with the first part data contained in the stored EPG information in order to specify whether or not the second broadcast station to which the channel used to transmit the second broadcast data is assigned is the first broadcast station corresponding to the EPG information.

According to another embodiment of the present invention, there is provided a first information processing apparatus for transmitting a broadcast program and broadcast data. In more detail, the first information processing apparatus includes: obtaining means for obtaining EPG information that is EPG information about the broadcast program transmitted from the information processing apparatus and that contains part data within the broadcast data, the part data capable of specifying a broadcast station for managing the information processing apparatus; superposition means for superposing the EPG information obtained by the obtaining means onto the broadcast program or the broadcast data; and transmission means for transmitting each of the broadcast program, the broadcast data, and the EPG information superposed onto the broadcast program or the broadcast data by the superposition means.

The broadcast data may be teletext data, and the part data within the broadcast data may be a part excluding time information within the header part of the teletext data.

According to another embodiment of the present invention, there is provided the first information processing method for use with a first information processing apparatus for transmitting a broadcast program and broadcast data. In more detail, the first information processing method includes the steps of obtaining EPG information that is EPG information about the broadcast program transmitted from the information processing apparatus and that contains part data within the broadcast data, the part data capable of specifying a broadcast station for managing the information processing apparatus; superposing the EPG information obtained in the obtaining step onto the broadcast program or the broadcast data; and controlling that the information processing apparatus transmits each of the broadcast program, the broadcast data, and the EPG information superposed onto the broadcast program or the broadcast data in superposition step.

According to another embodiment of the present invention, there is provided a first program to be executed by a computer for controlling a transmission apparatus for transmitting a broadcast program and broadcast data. The first program includes the steps of obtaining EPG information that is EPG information about the broadcast program transmitted from the information processing apparatus and that contains part data within the broadcast data, the part data capable of specifying a broadcast station for managing the information processing apparatus; superposing the EPG information obtained in the obtaining step onto the broadcast program or the broadcast data; and controlling that the information processing apparatus transmits each of the broadcast program, the broadcast data, and the EPG information superposed onto the broadcast program or the broadcast data in superposition step.

In the first information processing apparatus, the first information processing method, and the first program according to the embodiments of the present invention, the following processing is performed by the first information processing apparatus or the transmission apparatus (hereinafter, a reference is made only to the first information processing apparatus) for transmitting a broadcast program and broadcast data. More specifically, EPG information that is EPG information for a broadcast program transmitted from the first information processing apparatus and that contains part data within the broadcast data, the part data capable of specifying a broadcast station for managing the first information processing apparatus, is obtained. The obtained EPG information is superposed onto the broadcast program and the broadcast data. Each of the broadcast program, the broadcast data, and the EPG information superposed onto the broadcast program or the broadcast data is transmitted.

According to another embodiment of the present invention, there is provided a second information processing apparatus. The second information processing apparatus is an information processing apparatus for generating and outputting EPG information about a broadcast program transmitted from a predetermined broadcast station, and includes extraction means for extracting part data within broadcast data transmitted from the broadcast station, the part data capable of specifying the broadcast station; EPG information generation·means for generating EPG information containing the part data extracted by the extraction means; and output means for outputting the EPG information generated by the EPG information generation means.

In the second information processing apparatus, the broadcast data may be teletext data, and the part data within the broadcast data may be a part excluding time information within the header part of the teletext data.

According to another embodiment of the present invention, there is provided a second information processing method for use with a second information processing apparatus for generating and outputting EPG information about a broadcast program transmitted from a predetermined broadcast station. In more detail, the second information processing method includes the steps of extracting part data within the broadcast data transmitted from the broadcast station, the part data capable of specifying the broadcast station; generating EPG information containing the part data extracted in the extraction step; and controlling that the second information processing apparatus outputs the EPG information generated in the EPG information generation step.

According to another embodiment of the present invention, there is provided a second program. The second program is a program to be executed by a computer for controlling an EPG processing apparatus for generating and outputting EPG information about a broadcast program transmitted from a predetermined broadcast station. In more detail, the second program includes the steps of extracting part data within the broadcast data transmitted from the broadcast station, the part data capable of specifying the broadcast station; generating EPG information containing the part data extracted in the extraction step; and controlling that the EPG processing apparatus outputs the EPG information generated in the EPG information generation step.

In the second information processing apparatus, the second information processing method, and the second program according to the embodiments of the present invention, the following processing is performed by the second information processing apparatus or the EPG processing apparatus (hereinafter, a reference is made to only the second information processing apparatus). That is, broadcast data capable of specifying a broadcast station is extracted from within the broadcast data transmitted from the broadcast station, and EPG information containing the extracted part data is generated and output.

According to another embodiment of the present invention, there is provided a third information processing apparatus including storage means for storing EPG information that is EPG information about a broadcast program broadcast from a first broadcast station and that contains first part data within first broadcast data broadcast from the first broadcast station, the first part data capable of specifying the first broadcast station; receiving means for receiving second broadcast data transmitted using a predetermined channel; extraction means for extracting, from within the second broadcast data received by the receiving means, second part data capable of specifying a second broadcast station that has transmitted the second broadcast data; and specifying means for specifying whether or not the second broadcast station to which the channel used to transmit the second broadcast data is assigned is the first broadcast station corresponding to the EPG information by comparing the second part data extracted by the extraction means with the first part data contained in the EPG information stored in the storage means.

In the third information processing apparatus, the first broadcast data and the second broadcast data may be teletext data, and the first part data within the first broadcast data and the second part data within the second broadcast data may be parts excluding time information within the header part of the teletext data.

According to another embodiment of the present invention, there is provided a third information processing method for use with a third information processing apparatus including at least storage means and receiving means according to the embodiment of the present invention. In more detail, the third information processing method includes the steps of controlling the storage means so as to store EPG information that is EPG information about a broadcast program broadcast from a first broadcast station and that contains first part data within first broadcast data broadcast from the first broadcast station, the first part data capable of specifying the first broadcast station; controlling the receiving means so as to receive second broadcast data transmitted using a predetermined channel; extracting, from within the second broadcast data received by the receiving means in the reception controlling step, second part data capable of specifying a second broadcast station that has transmitted the second broadcast data; and specifying whether or not the second broadcast station to which the channel used to transmit the second broadcast data is assigned is the first broadcast station corresponding to the EPG information by comparing the second part data extracted in the extraction step with the first part data contained in the EPG information stored in the storage controlling step.

According to another embodiment of the present invention, there is provided a third program to be executed by a computer for controlling a receiving apparatus including at least storage means and receiving means. In more detail, the third program includes the steps of controlling the storage means so as to store EPG information that is EPG information about a broadcast program broadcast from a first broadcast station and that contains first part data within first broadcast data broadcast from the first broadcast station, the first part data capable of specifying the first broadcast station; controlling the receiving means so as to receive second broadcast data transmitted using a predetermined channel; extracting, from within the second broadcast data received by the receiving means in the reception controlling step, second part data capable of specifying a second broadcast station that has transmitted the second broadcast data; and specifying whether or not the second broadcast station to which the channel used to transmit the second broadcast data is assigned is the first broadcast station corresponding to the EPG information by comparing the second part data extracted in the extraction step with the first part data contained in the EPG information stored in the storage controlling step.

In the third information processing apparatus, the third information processing method, and the third program according to the embodiments of the present invention, the following processing is performed by the third information processing apparatus or the receiving apparatus including at least storage means and receiving means. More specifically, EPG information that is EPG information about a broadcast program broadcast from the first broadcast station and that contains first part data within the first broadcast data broadcast from the first broadcast station, the first part data capable of specifying the first broadcast station, is stored in the storage means. Second broadcast data transmitted using a predetermined connection is received by the receiving means. Second part data capable of specifying a second broadcast station that has transmitted the second broadcast data is extracted from within the second broadcast data received by the receiving means. The second extracted part data is compared with the first part data contained in the EPG information stored in the storage means. Based on the comparison result, it is specified whether or not the second broadcast station to which the channel used to transmit the second broadcast data is assigned is the first information corresponding to the EPG information.

As described above, according to the embodiments of the present invention, it becomes possible to utilize EPG information in various kinds of processing for broadcast programs and broadcast data. In particular, the execution of the "link between EPG information and the receiving channel", which is generally required before such various kinds of processing are performed, can be reliably performed, or information for enabling the above can be provided.

The present invention will be described further, by way of example only, with reference to preferred embodiments thereof as illustrated in the accompanying drawings, in which:
Fig. 1 is a block diagram showing an example of the configuration of an information processing system to which an embodiment of the present invention is applied, that is, an information processing system including information processing apparatuses to which an embodiment of the present invention is applied;
Fig. 2 shows an example of a teletext image corresponding to a teletext signal contained in broadcast waves broadcast by a broadcast station apparatus of Fig. 1;
Fig. 3 shows another example of the teletext image corresponding to the teletext signal contained in the broadcast waves broadcast by the broadcast station apparatus of Fig. 1;
Fig. 4 is a block diagram showing an example of the functional configuration of a broadcast station apparatus of Fig. 1;
Fig. 5 is a block diagram showing an example of the functional configuration of an EPG service provider apparatus of Fig. 1;
Fig. 6 shows an example of the structure of EPG information to which an embodiment of the present invention is applied;
Fig. 7 is a block diagram showing an example of the functional configuration of a user apparatus of Fig. 1;
Fig. 8 is a flowchart illustrating an example of "EPG-related processing" performed by the information processing system of Fig. 1;
Fig. 9 is a flowchart illustrating an example of "EPG-related processing" performed by the information processing system of Fig. 1;
Fig. 10 is a flowchart illustrating an example of a "linking process" performed by the user apparatus within the information processing system of Fig. 1;
Fig. 11 is a flowchart illustrating a detailed example of a "process for comparing a packet with a header" within the "linking process" of Fig. 10; and
Fig. 12 is a block diagram showing an example of the configuration of at least one piece of hardware among the broadcast station apparatus, the EPG service provider apparatus, and the user apparatus that constitute the information processing system of Fig. 1.

Before describing an embodiment of the present invention, the correspondence between the features of the claims and the specific elements disclosed in an embodiment of the present invention is discussed below. This description is intended to assure that embodiments supporting the claimed invention are described in this specification. Thus, even if an element in the following embodiments is not described as relating to a certain feature of the present invention, that does not necessarily mean that the element does not relate to that feature of the claims. Conversely, even if an element is described herein as relating to a certain feature of the claims, that does not necessarily mean that the element does not relate to other features of the claims.

Furthermore, this description should not be construed as restricting that all the aspects of the invention disclosed in the embodiments are described in the claims. That is, the description does not deny the existence of aspects of the present invention that are described in the embodiments but not claimed in the invention of this application, i.e., the existence of aspects of the present invention that in future may be claimed by a divisional application, or that may be additionally claimed through amendments.

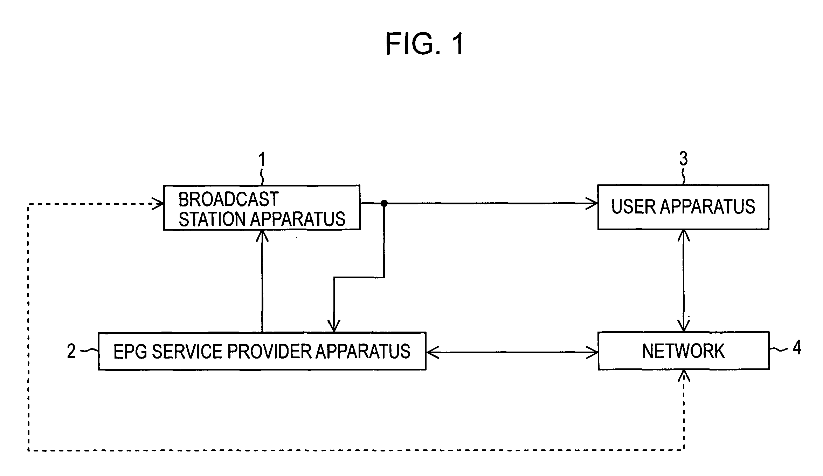

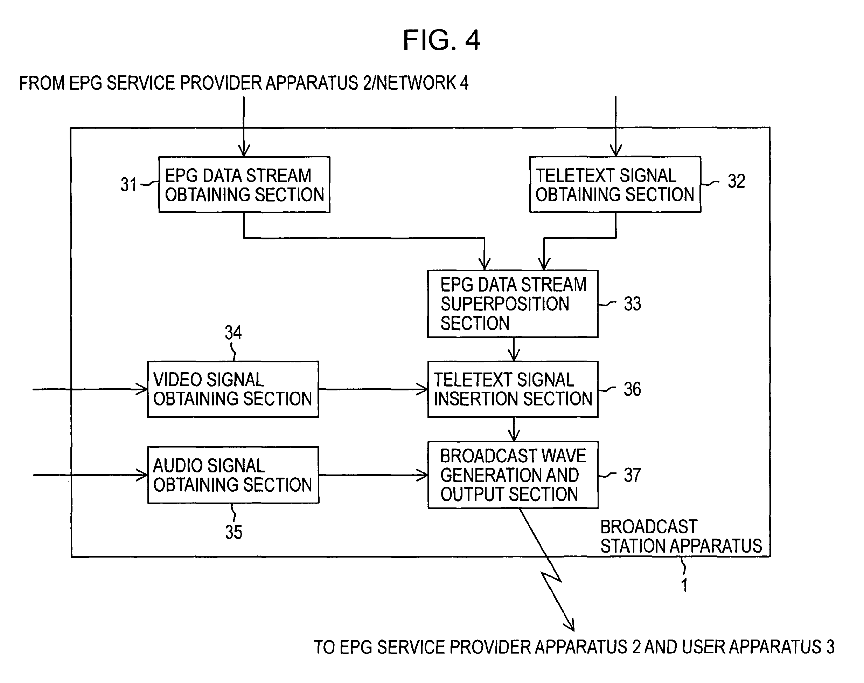

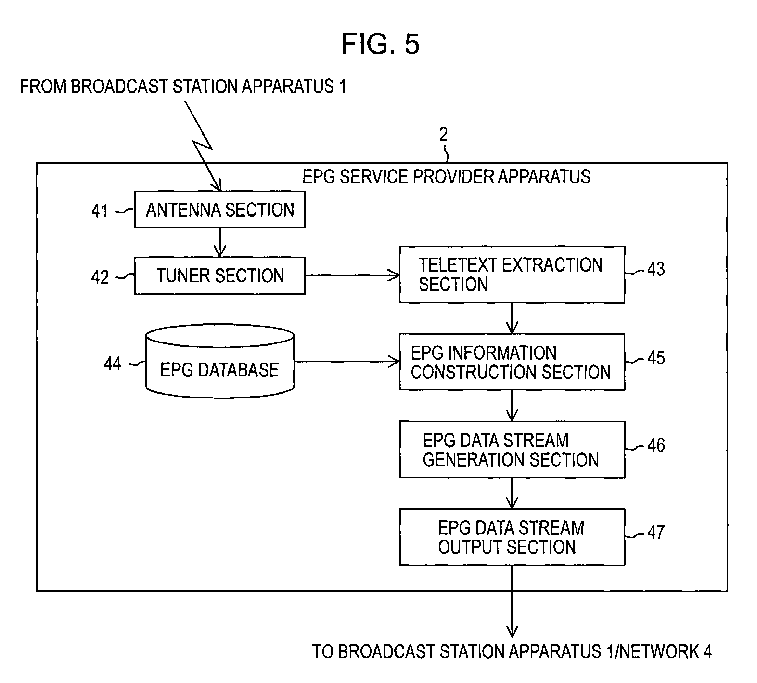

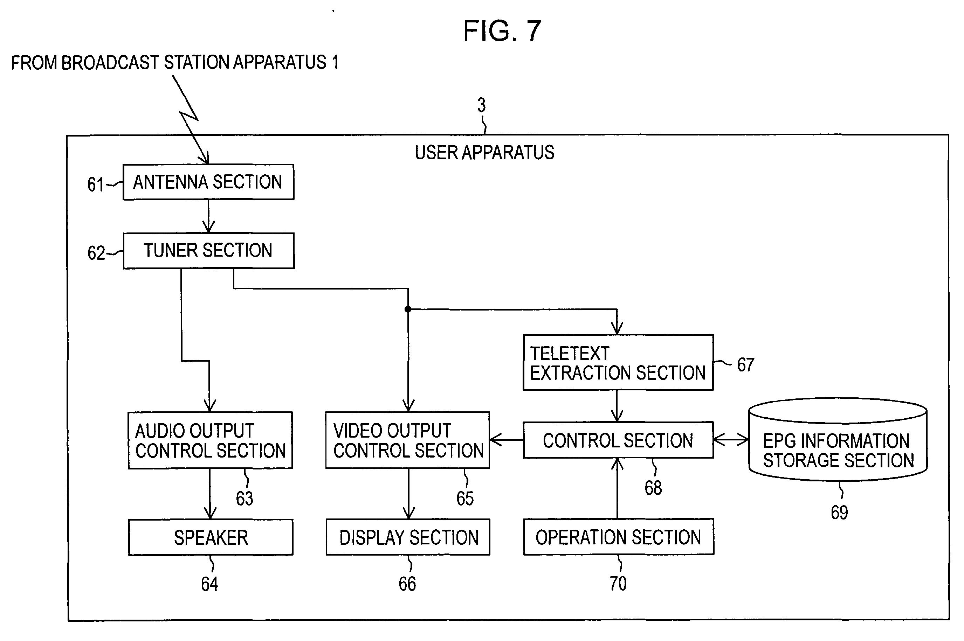

According to an embodiment of the present invention, an information processing system is provided. The information processing system (for example, the information processing system of Fig. 1) is an information processing system including a first information processing apparatus (for example, a broadcast station apparatus 1 of Fig. 1 and Fig. 4) for transmitting a broadcast program and broadcast data; a second information processing apparatus (for example, an EPG service provider apparatus 2 of Fig. 1 and Fig. 5) for generating and outputting EPG information about the broadcast program transmitted from the first information processing apparatus; and a third information processing apparatus (for example, a user apparatus 3 of Fig. 1 and Fig. 7) for performing processing that uses at least one of the broadcast program, the broadcast data, the broadcast program and the broadcast data being transmitted from the first information processing apparatus, and the EPG information output from the second information processing apparatus.

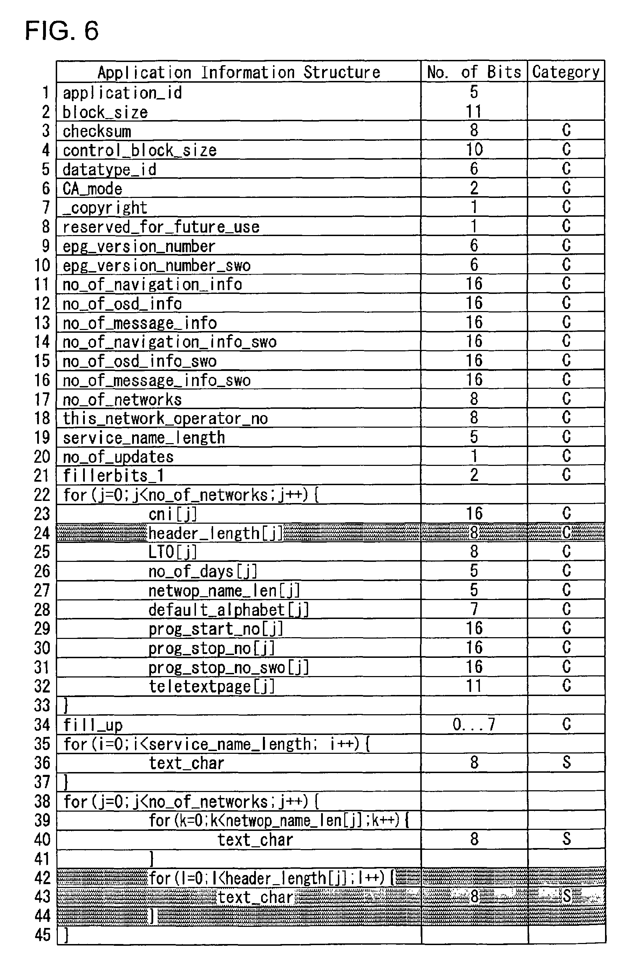

In more detail, in this information processing system, the second information processing apparatus includes first extraction means (for example, a teletext extraction section 43 of Fig. 5) for extracting, from within the first broadcast data transmitted from the first information processing apparatus, first part data capable of specifying a first broadcast station for managing the first information processing apparatus; EPG information generation means (for example, an EPG information construction section 45 and an EPG data stream generation section 46 of Fig. 5) for generating EPG information (for example, EPG information of the structure of Fig. 6) containing the first part data extracted by the first extraction means; and output means (for example, an EPG data stream output section 47 of Fig. 5) for outputting the EPG information generated by the EPG information generation means.

The third information processing apparatus includes storage means (for example, an EPG information storage section 69 of Fig. 7) for storing the EPG information output from the second information processing apparatus; receiving means (for example, an antenna section 61 and a tuner section 62 of Fig. 7) for receiving second broadcast data transmitted using a predetermined channel; second extraction means (for example, a teletext extraction section 67 of Fig. 7) for extracting, from within the second broadcast data received by the receiving means, second part data capable of specifying a second broadcast station that has transmitted the second broadcast data; and specifying means (for example, a control section 68 of Fig. 7) for specifying whether or not the second broadcast station to which the channel used to transmit the second broadcast data is assigned is the first broadcast station corresponding to the EPG information by comparing the second part data extracted by the second extraction means with the first part data contained in the EPG information stored in the storage means.

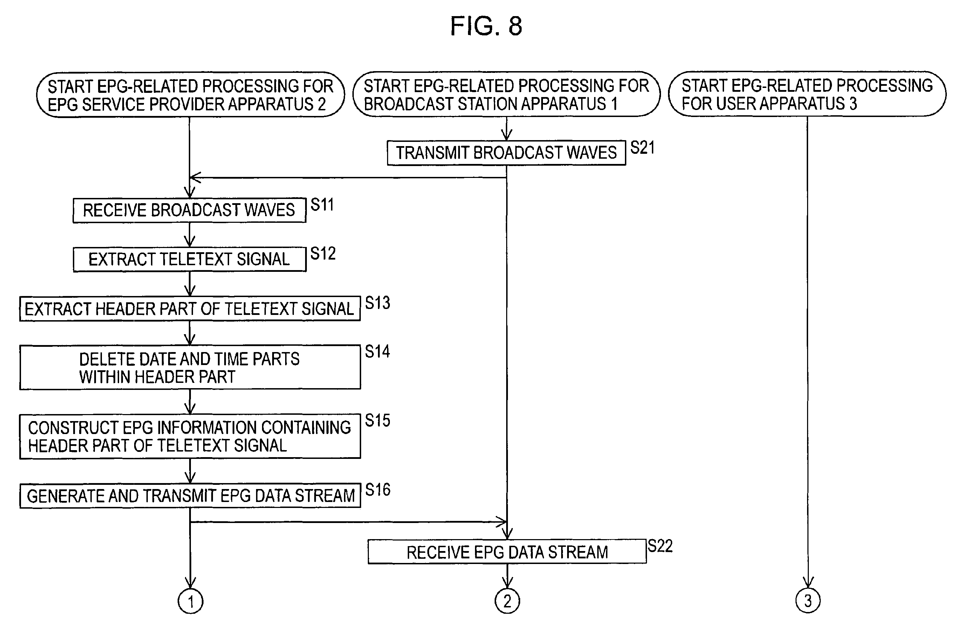

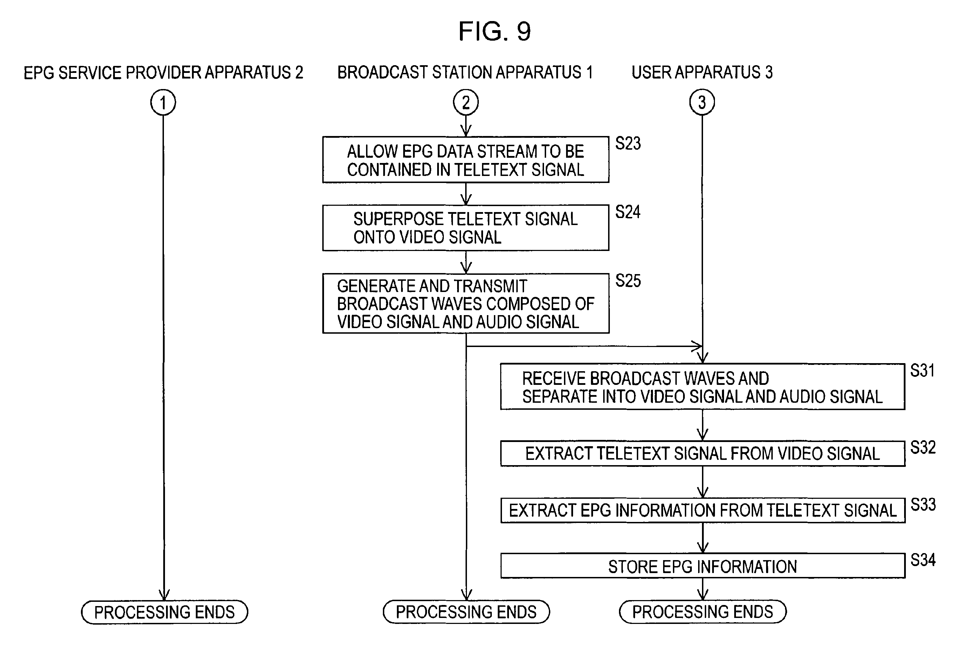

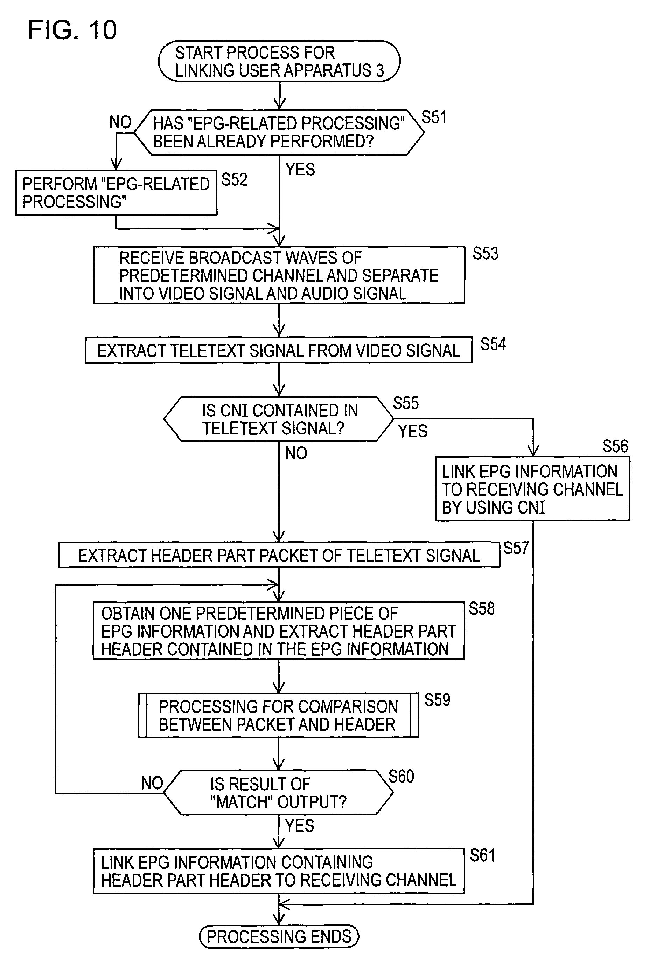

According to an embodiment of the present invention, there is provided an information processing method for use with the information processing system. The information processing method is an information processing method for use with the information processing system according to the embodiment of the present invention, and includes the steps of: extracting (for example, steps S13 and S14 of Fig. 8), from within the first broadcast data transmitted from the first information processing apparatus, first part data capable of specifying a first broadcast station for managing the first information processing apparatus; generating and outputting (for example, steps S15 and S16 of Fig. 8) EPG information containing the extracted first part data; storing (for example, step S34 of Fig. 9) the EPG information output from the second information processing apparatus; receiving (for example, steps S53 and S54 of Fig. 10) second broadcast data transmitted using a predetermined channel; extracting (for example, step S57 of Fig. 10), from within the received second broadcast data, second part data capable of specifying a second broadcast station that has transmitted the second broadcast data; and specifying (for example, steps S59, S60 (YES), and S61 of Fig. 10) whether or not the second broadcast station to which the channel used to transmit the second broadcast data is assigned is the first broadcast station corresponding to the EPG information by comparing the second extracted part data (for example, a header part packet described in step S57 of Fig. 10) with the first part data (for example, a header part header described in step S58 of Fig. 10) contained in the stored EPG information.

According to an embodiment of the present invention, there is provided a first information processing apparatus. The first information processing apparatus (for example, the broadcast station apparatus 1 of Fig. 1 and Fig. 4) is an information processing apparatus for transmitting a broadcast program and broadcast data, and includes: obtaining means (for example, an EPG data stream obtaining section 31 of Fig. 4) for obtaining EPG information that is EPG information about the broadcast program transmitted from the information processing apparatus and that contains part data within the broadcast data, the part data capable of specifying a broadcast station for managing the information processing apparatus; superposition means (for example, an EPG data stream superposition section 33 and a teletext signal insertion section 36 of Fig. 4) for superposing the EPG information obtained by the obtaining means onto the broadcast program or the broadcast data; and transmission means (for example, a broadcast wave generation and output section 37 of Fig. 4) for transmitting each of the broadcast program, the broadcast data, and the EPG information superposed onto the broadcast program or the broadcast data by the superposition means.

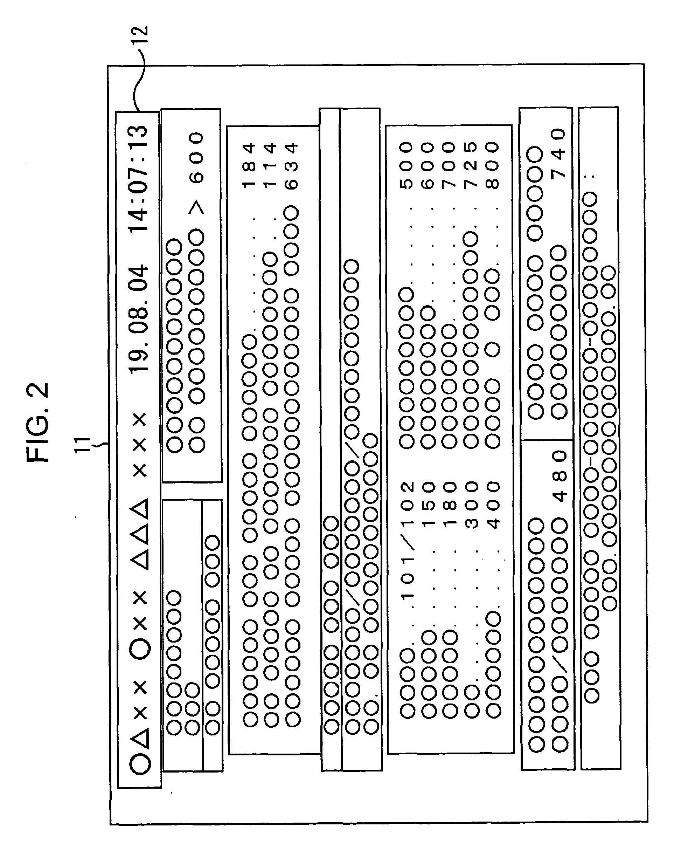

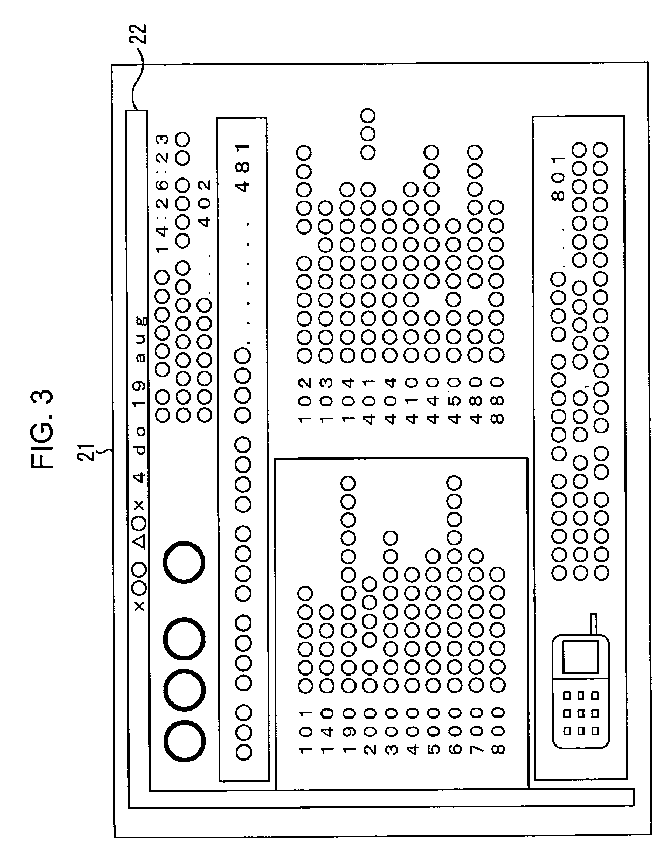

In the first information processing apparatus, the broadcast data may be teletext data (for example, data corresponding to a teletext image 11 of Fig. 2 or a teletext image 21 of Fig. 3). The part data within the broadcast data may be a part (for example, a pattern character string part of "○Δ×× ○×× ΔΔΔ ×××" in the example of Fig. 2, and a pattern character string part of "×○○ Δ○×" in the example of Fig. 3) excluding time information within the header part (for example, the header part corresponding to a display area 12 of Fig. 2 or a display area 22 of Fig. 3) of the teletext data.

According to an embodiment of the present invention, there is provided a first information processing method. The first information processing method is an information processing method for use with the first information processing apparatus according to the embodiment of the present invention, and includes obtaining (for example, step S22 of Fig. 8) EPG information that is EPG information about the broadcast program transmitted from the information processing apparatus and that contains part data within the broadcast data, the part data capable of specifying a broadcast station for managing the information processing apparatus; superposing (for example, steps S23 and S24 of Fig. 9) the EPG information obtained in the obtaining step onto the broadcast program or the broadcast data; and controlling (for example, step S25 of Fig. 9) that the information processing apparatus transmits each of the broadcast program, the broadcast data, and the EPG information superposed onto the broadcast program or the broadcast data in superposition step.

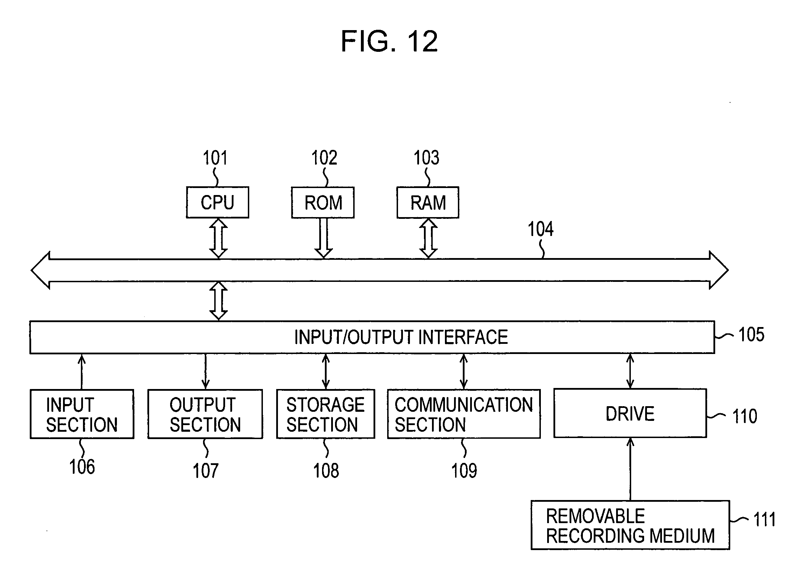

According to an embodiment of the present invention, there is provided a first program. The first program is a program corresponding to the first information processing method according to the embodiment of the present invention, and is a program executed by, for example, the computer of the configuration of Fig. 12. The transmission apparatus as referred to in the first program according to the embodiment of the present invention corresponds to the first information processing apparatus as referred to in the information processing method according to the embodiment of the present invention.

According to an embodiment of the present invention, of course, a first recording medium on which the first program according to the embodiment of the present invention is recorded is also provided.

According to an embodiment of the present invention, there is provided a second information processing apparatus. The second information processing apparatus (for example, the EPG service provider apparatus 2 of Fig. 1 and Fig. 5) is an information processing apparatus for generating and outputting EPG information about a broadcast program transmitted from a predetermined broadcast station, and includes extraction means (for example, a teletext extraction section 43 of Fig. 5) for extracting part data within broadcast data transmitted from the broadcast station, the part data capable of specifying the broadcast station; EPG information generation means (for example, an EPG information construction section 45 and an EPG data stream generation section 46 of Fig. 5) for generating EPG information containing the part data extracted by the extraction means; and output means (for example, an EPG data stream output section 47 of Fig. 5) for outputting the EPG information generated by the EPG information generation means.

In the second information processing apparatus, the broadcast data may be teletext data (for example, data corresponding to the teletext image 11 of Fig. 2 and the teletext image 21 of Fig. 3), and the part data within the broadcast data may be a part (for example, a pattern character string part of "○Δ×× O×× ΔΔΔ ×××" in the example of Fig. 2, and a pattern character string part of "×OO ΔO×" in the example of Fig. 3) excluding time information within the header part (for example, the header part corresponding to the display area 12 of Fig. 2 and the display area 22 of Fig. 3) of the teletext data.

According to an embodiment of the present invention, there is provided a second information processing method. The second information processing method is an information processing method for use with the second information processing apparatus according to the embodiment of the present invention. In more detail, the second information processing method includes extracting (for example, steps S13 and S14 of Fig. 8) part data within broadcast data transmitted from a broadcast station, the part data capable of specifying the broadcast station; generating (for example, step S15 of Fig. 8 (may include part of step S16)) EPG information containing the part data extracted in the extraction step; and controlling (for example, at least a part of step S16 of Fig. 8) that the information processing apparatus outputs the EPG information generated in the EPG information generation step.

According to an embodiment of the present invention, there is provided a second program. The second program is a program corresponding to the second information processing method according to the embodiment of the present invention, and is a program executed by, for example, a computer of the configuration of Fig. 12. The EPG processing apparatus as referred to in the second program according to the embodiment of the present invention corresponds to the second information processing apparatus as referred to in the second information processing method according to the embodiment of the present invention.

According to an embodiment of the present invention, of course, a second recording medium on which the second program according to the embodiment of the present invention is recorded is also provided.

According to an embodiment of the present invention, there is provided a third information processing apparatus. The third information processing apparatus (for example, the user apparatus 3 of Fig. 1 and Fig. 7) includes storage means (for example, an EPG information storage section 69 of Fig. 7) for storing EPG information that is EPG information about a broadcast program broadcast from a first broadcast station and that contains first part data within first broadcast data broadcast from the first broadcast station, the first part data capable of specifying the first broadcast station; receiving means (for example, an antenna section 61 and a tuner section 62 of Fig. 7) for receiving second broadcast data transmitted using a predetermined channel; extraction means (for example, a teletext extraction section 67 of Fig. 7) for extracting, from within the second broadcast data received by the receiving means, second part data capable of specifying a second broadcast station that has transmitted the second broadcast data; and specifying means (for example, a control section 68 of Fig. 7) for specifying whether or not the second broadcast station to which the channel used to transmit the second broadcast data is assigned is the first broadcast station corresponding to the EPG information by comparing the second part data extracted by the extraction means with the first part data contained in the EPG information stored in the storage means.

In the third information processing apparatus, the first broadcast data and the second broadcast data may be teletext data (for example, data corresponding to the teletext image 11 of Fig. 2 and the teletext image 21 of Fig. 3). The first part data within the first broadcast data and the second part data within the second broadcast data may be parts (for example, a pattern character string part of "○Δ×× ○×× ΔΔΔ ×××" in the example of Fig. 2, and a pattern character string part of "×○○ Δ○×" in the example of Fig. 3) excluding time information within the header part (for example, the header part corresponding to the display area 12 of Fig. 2 and the display area 22 of Fig. 3) of the teletext data.

According to an embodiment of the present invention, there is provided a third information processing method. The third information processing method is an information processing method for use with the third information processing apparatus including at least storage means and receiving means according to the embodiment of the present invention, and includes the steps of controlling (for example, step S34 of Fig. 9) the storage means so as to store EPG information that is EPG information about a broadcast program broadcast from a first broadcast station and that contains first part data within first broadcast data broadcast from the first broadcast station, the first part data capable of specifying the first broadcast station; controlling (for example, steps S53 and S54 of Fig. 10) the receiving means so as to receive second broadcast data transmitted using a predetermined channel; extracting (for example, step S57 of Fig. 10), from within the second broadcast data received by the receiving means in the reception controlling step, second part data capable of specifying a second broadcast station that has transmitted the second broadcast data; and specifying (for example, steps S59, S60 (YES), and S61 of Fig. 10) whether or not the second broadcast station to which the channel used to transmit the second broadcast data is assigned is the first broadcast station corresponding to the EPG information by comparing the second part data extracted in the extraction step with the first part data contained in the EPG information stored in the storage controlling step.

According to an embodiment of the present invention, a third program is provided. The third program is a program corresponding to the third information processing method according to the embodiment of the present invention, and is a program executed, for example, by a computer having the configuration of Fig. 12. The receiving apparatus as referred to in the third program according to the embodiment of the present invention corresponds to the third information processing apparatus as referred to in the third information processing method according to the embodiment of the present invention.

According to an embodiment of the present invention, of course, a third recording medium on which the third program according to the embodiment of the present invention is recorded is also provided.

Next, preferred embodiments of the present invention will be described with reference to the drawings.

Fig. 1 shows an example of the configuration of an information processing system to which an embodiment of the present invention is applied.

As shown in Fig. 1, the information processing system includes a broadcast station apparatus 1, an EPG service provider apparatus 2, and a user apparatus 3. The number of each of the broadcast station apparatus 1, the EPG service provider apparatus 2, and the user apparatus 3 is set to 1 in the example of Fig. 1, but of course, any number of these apparatuses may be provided.

The broadcast station apparatus 1 is managed by a broadcast station (not shown) to which a predetermined channel (frequency) is assigned, and transmits broadcast waves by using the channel.

The broadcast waves contain video signals and audio signals forming a broadcast program and also predetermined broadcast data. More specifically, for example, in a broadcast station in Europe, the data of the teletext described in "ETSI EN 300 707 V1.2.1 (2003-04)" and "TR 101 231 "EBU web version" (2003-10)", [online], [searched on September 20, 2004], Internet, <URL :http://www.etsi.org> corresponds to broadcast data. The teletext data contains data of an image for a character broadcast (hereinafter referred to as a "teletext image") in page units shown in, for example, Figs. 2 and 3. That is, Figs. 2 and 3 show examples of a teletext image at a predetermined page about a predetermined broadcast station.

The display area 12 at the topmost of the teletext image 11 of Fig. 2 is an area in which information contained in the header part of the corresponding teletext data is displayed. That is, in the example of Fig. 2, it can be seen that the header part of the teletext data corresponding to the teletext image 11 contains a character string of "OΔ×× O×× ΔΔΔ ××× 19. 08. 04 14:07:13".

Similarly, the display area 22 at the topmost of the teletext image 21 of Fig. 3 is an area in which information contained in the header part of the corresponding teletext data is displayed. That is, in the example of Fig. 3, it can be seen that the header part of the teletext data corresponding to the teletext image 21 contains a character string of "XOO ΔOX 4 do 19 aug".

It has been empirically known that the first half part of the header part of the teletext data is a part of the pattern character string that contains the corresponding broadcast station name and that is determined on its own by the broadcast station and that the pattern character string hardly changes. That is, for example, in the example of Fig. 2, it has been empirically known that the character string part of "○Δ×× O×× ΔΔΔ ×××" is a pattern character string part that is determined on its own by the broadcast station that transmits the teletext data corresponding to the teletext image 11 and that the pattern character string part hardly changes. Similarly, in the example of Fig. 3, it has been empirically known that the character string part of "×○○ Δ○×" is a pattern character string part that is determined on its own by the broadcast station that transmits the teletext data corresponding to the teletext image 21 and that the pattern character string part hardly changes.

In the second half part within the header part of the teletext data, it is well known that, generally, time information of the date and time is inserted. For example, in the example of Fig. 2, it can be seen that, following the pattern character string part of "○Δ×× ○×× ΔΔΔ ×××", time information of the date and time, such as "19.08.04 14:07:13", is inserted. Similarly, in the example of Fig. 3, it can be seen that, following the pattern character string part of "×OO ΔO×", time information of the date and time, such as "4 do 19 aug", is inserted.

From the above, it can be seen that the first half part excluding the time information of the date and time, that is, the predetermined pattern character string part, within the header part of the teletext data allows the corresponding broadcast station to be specified.

Thus, the inventors of the present invention considered that, when the user apparatus 3 in Europe performs the above-described "link between EPG information and the receiving channel", as the information for identifying (specifying) a broadcast station that does not transmit CNI, the first half part excluding the time information within the header part of the teletext data can be used.

Furthermore, in order for the user apparatus 3 in Europe to perform a "link between EPG information and the receiving channel", it is necessary to use the EPG information. Therefore, based on this concept, the inventors of the present invention have invented a technique for allowing the first half part excluding the time information within the header part of the teletext data of a predetermined broadcast station to be contained in the EPG information of the broadcast station.

As a result of this technique being applied, for example, when the broadcast station apparatus 1 transmits the teletext data corresponding to the teletext image 11 in the example of Fig. 2, in the EPG information of the broadcast station that manages the broadcast station apparatus 1, the pattern character string part of "○Δ×× ○×× ΔΔΔ ×××" within the header part (the display area 12) of the teletext data is contained. Similarly, for example, when the broadcast station apparatus 1 transmits the data of the teletext corresponding to the teletext image 21 in the example of Fig. 3, in the EPG information of the broadcast station that manages the broadcast station apparatus 1, the pattern character string part of "×OO ΔO×" within the header part (the display area 22) of the teletext data is contained.

An example in which such a technique is realized, that is, an example in which EPG information containing the first half part excluding the time information within the header part of the teletext data is realized, will be described later with reference to Fig. 6.

As described above, the problems of the related art arise exactly in a similar manner when data capable of specifying a broadcast station is not contained in CNI and in addition, is neither contained in the broadcast waves nor in the EPG information. That is, in areas other than Europe, in which CNI is not used, the problems of the related art arise exactly in a similar manner when data capable of specifying a broadcast station is neither contained in the broadcast waves nor in the EPG information.

Thus, for the purpose of solving or at least alleviating the problems of the related art in areas other than Europe, the inventors of the present invention have further invented a technique for allowing a part capable of specifying the target broadcast station (hereinafter referred to as a "broadcast station specifying part") within the broadcast data broadcast from a predetermined broadcast station to be contained in the EPG information of the target broadcast station.

In other words, as an example of such a technique, there is the above-described technique in which the part excluding the time information within the header part of the teletext data of the target broadcast station is contained in the EPG information of a predetermined broadcast station.

As an apparatus capable of performing a process corresponding to such a technique, that is, a process for generating EPG information containing the broadcast station specifying part, for example, in the example of Fig. 1, the EPG service provider apparatus 2 is provided.

That is, the EPG service provider apparatus 2 is managed by an EPG service provider (not shown), and obtains and holds various kinds of information, such as program meta information, about a broadcast station that manages the broadcast station apparatus 1. Furthermore, the EPG service provider apparatus 2 receives the broadcast data (for example, teletext data in Europe) transmitted from the broadcast station apparatus 1 and extracts, from the broadcast data, the broadcast station specifying part (for example, the part excluding the time information within the header part in the case of the teletext data). Then, the EPG service provider apparatus 2 constructs the program meta information and also the EPG information containing the broadcast station specifying part, and generates an EPG data stream from the EPG information.

According to the above-described "ETSI EN 300 707 V1.2.1 (2003-04)" and "TR 101 231 "EBU web version" (2003-10)", it is defined that the EPG data stream be contained in the teletext data. Therefore, in Europe, generally, the EPG information is often provided to the user apparatus 3 in such a manner as to be contained in the broadcast waves from the broadcast station apparatus 1.

Therefore, for example, the EPG service provider apparatus 2 in Europe provides an EPG data stream to the broadcast station apparatus 1. At this time, if the broadcast station apparatus 1 is connected to the network 4, it is also possible for the EPG service provider apparatus 2 to transmit the EPG data stream to the broadcast station apparatus 1 via the network 4 as necessary.

However, the provision of the EPG data stream to the user apparatus 3 does not particularly need to go through the broadcast station apparatus 1, and the EPG data stream may be provided through any passage. More specifically, for example, the EPG service provider apparatus 2 can also transmit an EPG data stream to the user apparatus 3 via the network 4 as necessary.

The user apparatus 3 is managed by a user (not shown), receives broadcast waves transmitted from the broadcast station apparatus 1, and can perform various kinds of processing on a broadcast program and the broadcast data (for example, teletext data in Europe) contained in the broadcast waves. The various kinds of processing as referred to herein include, for example, a series of processing necessary from when data forming a broadcast program and broadcast data is stored until an image and sound corresponding to those pieces of the data are output.

However, it is necessary for the user apparatus 3 to perform the above-described "link between EPG information and the receiving channel" before such various kinds of processing are performed. In this case, the user apparatus 3 is able to use the above-described broadcast station specifying part (for example, in the case of teletext data, the part excluding the time information within the header part) contained in both the broadcast waves and the EPG information.

In more detail, for example, the user apparatus 3 obtains and stores the EPG information about a broadcast station that manages the broadcast station apparatus 1 (hereinafter referred to as "EPG information of the broadcast station apparatus 1") from the broadcast station apparatus 1 or the EPG service provider apparatus 2.

Furthermore, for example, the user apparatus 3 sets a predetermined channel as a receiving channel in order to receive broadcast waves, and extracts the broadcast station specifying part contained in the broadcast waves.

The broadcast waves received by the receiving channel at this time become the broadcast waves from the broadcast station apparatus 1 in the example of Fig. 1. However, at the time before the "link between EPG information and the receiving channel" is performed, it is not possible for the user apparatus 3 to recognize this fact. In other words, due to the very fact that it is difficult for the user apparatus 3 to recognize this fact, the "link between EPG information and the receiving channel" needs to be performed.

Therefore, for example, the user apparatus 3 compares the first broadcast station specifying part contained in the EPG information of the broadcast station apparatus 1 with the second broadcast station specifying part contained in the broadcast waves received by the receiving channel, specifies (identifies) that the broadcast station to which the receiving channel is assigned is a broadcast station indicated by the EPG information of the broadcast station apparatus 1 when the first broadcast station specifying part matches the second the broadcast station specifying part, and performs the "link between EPG information and the receiving channel" with respect to the broadcast station apparatus 1.

In contrast, for example, when the first broadcast station specifying part does not match the second broadcast station specifying part, the user apparatus 3 further searches for another EPG information containing the same broadcast station specifying part as the second broadcast station specifying part. Then, when such other EPG information can be found, the user apparatus 3 determines that the broadcast station to which the receiving channel is assigned is a broadcast station indicated by the other found EPG information (a broadcast station that manages a broadcast station apparatus (not shown) other than the broadcast station apparatus 1), and performs the "link between EPG information and the receiving channel" with respect to the found EPG information.

In Europe, as described above, CNI is often contained in broadcast waves. In such a case, initially, the user apparatus 3 should perform the above-described "link between EPG information and the receiving channel" of the related art using CNI and thereafter, should perform the above-described "link between EPG information and the receiving channel" using the above-described broadcast station specifying part with respect to only the channel in which the "link between EPG information and the receiving channel" of the related art was difficult, that is, the channel assigned to the broadcast station that does not transmit CNI.

In the foregoing, an example of the configuration of the information processing system to which an embodiment of the present invention is applied has been described with reference to Fig. 1.

In such an information processing system, embodiments of the broadcast station apparatus 1 are not particularly limited as long as it can transmit a broadcast program and can transmit broadcast data containing a broadcast station specifying part. Embodiments of the EPG service provider apparatus 2 are not particularly limited as long as it can generate and output EPG information containing a broadcast station specifying part. Embodiments of the user apparatus 3 are not particularly limited as long as it can perform the "link between EPG information and the receiving channel" by using a first broadcast station specifying part contained in the EPG information output from the EPG service provider apparatus 2 and a second broadcast station specifying part contained in the broadcast data transmitted by the broadcast station apparatus 1 by using the receiving channel.

However, in the following, it is assumed that the broadcast station apparatus 1 transmits teletext data (signals) defined in the above-described "ETSI EN 300 707 V1.2.1 (2003-04)" and "TR 101 231 "EBU web version" (2003-10)" as the broadcast data containing the broadcast station specifying part. That is, in the following, it is assumed that the pattern character string part excluding the time information within the header part of the teletext signal is used as the broadcast station specifying part. Furthermore, in the following, it is assumed that the EPG information is provided from the broadcast station apparatus 1 to the user apparatus 3 in such a manner as to be contained in the teletext signal.

In this case, the broadcast station apparatus 1 can have the functional configuration shown in, for example, Fig. 4. The EPG service provider apparatus 2 can have the functional configuration shown in, for example, Fig. 5. The EPG service provider apparatus 2 having such a functional configuration of Fig. 5 can construct EPG information of the structure shown in, for example, Fig. 6. The user apparatus 3 can have the functional configuration shown in, for example, Fig. 7.

Fig. 4 shows an example of the configuration of the broadcast station apparatus 1 to which an embodiment of the present invention is applied. Fig. 5 shows an example of the configuration of the EPG service provider apparatus 2 to which an embodiment of the present invention is applied. Fig. 6 shows an example of the structure of EPG information to which an embodiment of the present invention is applied. Fig. 7 shows an example of the functional configuration of the user apparatus 3 to which an embodiment of the present invention is applied. Therefore, in the following, with reference to the corresponding figure among Figs. 4 to 7, an example of the functional configuration of each of the broadcast station apparatus 1, the EPG service provider apparatus 2, and the user apparatus 3 will be described individually in this order.

First, referring to Fig. 4, an example of the functional configuration of the broadcast station apparatus 1 is described.

The broadcast station apparatus 1 is configured to include the parts including an EPG data stream obtaining section 31 through to a broadcast wave generation and output section 37.

The EPG data stream obtaining section 31 obtains an EPG data stream output from the EPG service provider apparatus 2 and provides it to the EPG data stream superposition section 33. As described above, the EPG data stream is sometimes directly supplied from the EPG service provider apparatus 2 to the EPG data stream obtaining section 31, and is sometimes supplied from the EPG service provider apparatus 2 to the EPG data stream obtaining section 31 via the network 4.

The teletext signal obtaining section 32 obtains a teletext signal (data) supplied from the outside and supplies it to the EPG data stream superposition section 33. The outside as referred to herein refers to the outside when viewed from the broadcast station apparatus 1. It may be another apparatus managed, together with the broadcast station apparatus 1, by the broadcast station, and may also be another apparatus managed by a party other than the broadcast station.

The EPG data stream superposition section 33 superposes the EPG data stream supplied from the EPG data stream obtaining section 31 onto the teletext signal supplied from the teletext signal obtaining section 32, and supplies it to the teletext signal insertion section 36. When an EPG data stream is not supplied from the EPG data stream obtaining section 31, the EPG data stream superposition section 33 supplies the teletext signal supplied from the teletext signal obtaining section 32 without any change to the teletext signal insertion section 36.

The broadcast program of the broadcast station that manages the broadcast station apparatus 1 is supplied from the outside to the broadcast station apparatus 1. The outside as referred to herein refers to the outside when viewed from the broadcast station apparatus 1. It may be another apparatus managed, together with the broadcast station apparatus 1, by the broadcast station, and may also be another apparatus managed by a party other than the broadcast station.

In more detail, for example, a video signal among the video signal and an audio signal that form a broadcast program is supplied to the video signal obtaining section 34, and the audio signal is supplied to the audio signal obtaining section 35. Therefore, the video signal obtaining section 34 obtains the video signal and supplies it to the teletext signal insertion section 36. On the other hand, the audio signal obtaining section 35 obtains the audio signal and supplies it to the broadcast wave generation and output section 37.

The teletext signal insertion section 36 inserts the teletext signal supplied from the EPG data stream superposition section 33 into a predetermined part of the video signal supplied from the video signal obtaining section 34, and supplies it to the broadcast wave generation and output section 37.

The broadcast wave generation and output section 37 generates and outputs broadcast waves containing the video signal supplied from the teletext signal insertion section 36 and the audio signal supplied from the audio signal obtaining section 35. The broadcast waves output from the broadcast wave generation and output section 37 are received by the EPG service provider apparatus 2 and the user apparatus 3.

In the foregoing, an example of the functional configuration of the broadcast station apparatus 1 has been described with reference to Fig. 4.

Next, a description will be given, with reference to Fig. 5, of an example of the functional configuration of the EPG service provider apparatus 2.

The EPG service provider apparatus 2 is configured to include the parts including an antenna section 41 through to an EPG data stream output section 47.

The tuner section 42 receives broadcast waves of a predetermined channel, that is, broadcast waves broadcast from the broadcast station apparatus 1 in the example of Fig. 5, via the antenna section 41, demodulates the broadcast waves into a video signal and an audio signal, and supplies at least the video signal to the teletext extraction section 43.

The teletext extraction section 43 extracts a teletext signal from the video signal supplied from the tuner section 42, further extracts the first half part (pattern character string part) excluding the time information of the date and time within the header part of the teletext signal, and supplies it to the EPG information construction section 45. That is, the teletext extraction section 43 extracts the first half part excluding the time information within the header part of the teletext signal as a broadcast station specifying part (hereinafter referred to as a "broadcast station specifying part of the broadcast station apparatus 1") with respect to the broadcast station that manages the broadcast station apparatus 1, and supplies it to the EPG information construction section 45.

More specifically, for example, when a video signal containing a teletext signal corresponding to the teletext image 11 in the example of Fig. 2 is supplied from the tuner section 42, the teletext extraction section 43 extracts a pattern character string part of "OΔ×× O×× ΔΔΔ ×××" within the header part (the display area 12) of the teletext signal as the broadcast station specifying part of the broadcast station apparatus 1, and supplies it to the EPG information construction section 45. Similarly, when a video signal containing a teletext signal corresponding to the teletext image 21 in the example of Fig. 3 is supplied from the tuner section 42, the teletext extraction section 43 extracts a pattern character string part of "OO ΔO×" within the header part (the display area 22) of the teletext signal as the broadcast station specifying part of the broadcast station apparatus 1, and supplies it to the EPG information construction section 45.

It is assumed here that the teletext extraction section 43 automatically extracts the first half part excluding the time information within the header part of the teletext signal by using an appropriate algorithm. However, although not shown in the figure, if an operation section is provided in the EPG service provider apparatus 2, the first half part excluding the time information within the header part of the teletext signal can also be extracted by manually operating the operation section by an EPG service provider and by recognizing the manual operation by the teletext extraction section 43.

The extraction of the first half part excluding the time information within the header part of the teletext signal is a broad concept including that, of course, the first half part is actively extracted from the header part of the teletext signal and also, the time information of the date and time is deleted from the header part of the teletext signal.

The EPG database 44 has prestored therein various kinds of information necessary to construct the EPG information of the broadcast station apparatus 1, for example, so-called program meta information. The provision source of various kinds of information stored in the EPG database 44, the method of obtaining various kinds of information from the provision source, and the method of storing the obtained various kinds of information in the EPG database 44 are not particularly limited.

The EPG information construction section 45 constructs the EPG information of the structure shown in, for example, Fig. 6 by using the various kinds of information prestored in the EPG database 44 and the broadcast station specifying part supplied from the teletext extraction section 43, and supplies the EPG information to the EPG data stream generation section 46.

Fig. 6, as described above, shows an example of the structure of EPG information to which an embodiment of the present invention is applied. A description is given below, with reference to Fig. 6, of an example of the structure of EPG information to which an embodiment of the present invention is applied.

The structure of the EPG information in the example of Fig. 6 is a structure that is newly invented by the inventors of the present invention on the basis of the structure described in Table 1-11 of the above-described "ETSI EN 300 707 V1.2.1 (2003-04)". That is, the inventors of the present invention have invented EPG information having the structure of Fig. 6, in which new information of "header_length(j)" shown in the 24th line is added with respect to Table 1-11 of the above-described "ETSI EN 300 707 V1.2.1 (2003-04)" and also new information of "for (1 = 0; 1 < header_length[j]; 1++) {text_chair} shown in the 42th to 44th lines is added thereto. Such new additional information is information for embedding the broadcast station specifying part supplied from the teletext extraction section 43 of Fig. 5 in the EPG information.

In more detail, the information of "header_length(j)" shown in the 24th line means that the length of the broadcast station specifying part supplied from the teletext extraction section 43, that is, the number of characters of the pattern character string part, is described at the place corresponding to the 24th line within the EPG information.

More specifically, for example, when the pattern character string part of "OΔ×× O×× ΔΔΔ ×××" within the header part (the display area 12) of the teletext signal corresponding to the teletext image 11 in the example of Fig. 2 is extracted as the broadcast station specifying part, if the space is assumed to be considered as one character, "16" is written as "header_length(j)" shown in the 24th line.

On the other hand, for example, when the character string part of "×○○ Δ○×" within the header part (the display area 22) of the teletext signal corresponding to the teletext image 21 in the example of Fig. 3 is extracted as the broadcast station specifying part, if the space is assumed to be considered as one character, "7" is written as "header_length(j)" shown in the 24th line.

The information of "for (1 = 0; 1 < header_length[j]; 1++) {text_chair} shown in the 42th to 44th lines means that the broadcast station specifying part supplied from the teletext extraction section 43, that is, each of the characters forming the pattern character string part, is written by a loop that defines the length by header_length(j) in the 24th line at a place corresponding to the 42th to 44th lines within the EPG information.

More specifically, for example, when the pattern character string part of "OΔ×× O×× ΔΔΔ ×××" within the header part (the display area 12) of the teletext signal corresponding to the teletext image 11 in the example of Fig. 2 is extracted as the broadcast station specifying part, the character string of the "OΔ×× O×× ΔΔΔ ×××" is written at the place corresponding to the 42th to 44th lines within the EPG information.

On the other hand, for example, when the pattern character string part of "×○○ Δ○×" within the header part (the display area 22) of the teletext signal corresponding to the teletext image 21 in the example of Fig. 3 is extracted as the broadcast station specifying part, the character string of "×OO ΔO×" is written at the place corresponding to the 42th to 44th lines within the EPG information.

The information of the other lines is information that is also contained in the structure shown in Table 1-11 of the above-described "ETSI EN 300 707 V1.2.1 (2003-04)", and can be easily understood by a person skilled in the art by referring to the "ETSI EN 300 707 V1.2.1 (2003-04)". Accordingly, the descriptions of the information of the other lines are omitted here.

Of course, the structure of the EPG information to which an embodiment of the present invention is applied is not particularly limited as long as the broadcast station specifying part of the broadcast station apparatus 1 is contained. However, such EPG information of the structure of Fig. 6 is suitably adopted. The reason for this is that the EPG information of the structure of Fig. 6 is a structure such that the above-described simplified additional information is simply added to the structure of the related art, and it becomes possible for even the apparatus that uses an EPG of the structure of the related art to use it by a simple modification.

Referring back to Fig. 5, when the EPG information of the structure of Fig. 6, that is, the EPG information containing the broadcast station specifying part of the broadcast station apparatus 1, is supplied to the EPG data stream generation section 46, the EPG data stream generation section 46 generates an EPG data stream from the EPG information and supplies it to the EPG data stream output section 47.

The EPG data stream output section 47 outputs the EPG data stream output from the EPG data stream generation section 46 to the broadcast station apparatus 1. In this case, the EPG data stream output section 47 sometimes directly outputs the EPG data stream to the broadcast station apparatus 1 and sometimes outputs it to the broadcast station apparatus 1 via the network 4.

In the foregoing, an example of the functional configuration of the EPG service provider apparatus 2 has been described with reference to Fig. 5.

Next, a description is given, with reference to Fig. 7, of an example of the functional configuration of the user apparatus 3.

The user apparatus 3 is configured to include the parts including an antenna section 61 through to an operation section 70.

The tuner section 62 receives, via the antenna section 61, the broadcast waves of a predetermined channel, that is, the broadcast waves broadcast from the broadcast station apparatus 1 in the example of Fig. 7, and demodulates the broadcast waves into a video signal and an audio signal. Then, the tuner section 62 supplies the audio signal among the video signal and the audio signal to the audio output control section 63 and also, supplies the video signal to the video output control section 65 and the teletext extraction section 67.

The audio output control section 63 allows audio corresponding to the audio signal supplied from the tuner section 62 to be output from the speaker 64. Furthermore, the audio output control section 63 is able to output the audio signal supplied from the tuner section 62 to the outside via an output terminal (not shown).

The video output control section 65 allows a video image corresponding to the video signal supplied from the tuner section 62 to be displayed on the display section 66. Furthermore, the video output control section 65 allows an image corresponding to the teletext signal (containing the EPG information) supplied from the control section 68 (to be described later), that is, for example, the teletext image 11 of Fig. 2, the teletext image 21 of Fig. 3, an EPG (not shown), etc., to be displayed on the display section 66. Furthermore, the video output control section 65 is also able to output the video signal supplied from the tuner section 62 and the teletext signal (containing the EPG information) supplied from the control section 68 to the outside via the output terminal (not shown).

The teletext extraction section 67 extracts a teletext signal from the video signal supplied from the tuner section 62 and supplies the teletext signal to the control section 68.

When the EPG information is contained in the teletext signal supplied from the teletext extraction section 67, the control section 68 extracts the EPG information, and stores it in the EPG information storage section 69 and/or supplies it to the video output control section 65. When the EPG information is supplied to the video output section 65, the EPG corresponding to the EPG information is displayed on the display section 66.

Furthermore, the control section 68 supplies the teletext signal supplied from the teletext extraction section 67 to the video output control section 65. In this case, the teletext image corresponding to the teletext signal, that is, for example, the teletext image 11 of Fig. 2 or the teletext image 21 of Fig. 3, is displayed on the display section 66.

Furthermore, the control section 68 is also able to perform the "link between EPG information and the receiving channel". That is, the control section 68 is able to perform the "link between EPG information and the receiving channel" by comparing the first the broadcast station specifying part contained in each piece of the EPG information stored in the EPG information storage section 69 with the second broadcast station specifying part contained in the teletext signal that is newly supplied from the teletext extraction section 67. That is, in this case, the first and second broadcast station specifying parts that are compared with each other by the control section 68 become first half parts excluding the time information of the time and date within the header part of the teletext signal, that is, pattern character string parts in the manner described above.

A more detailed example of the processing of the "link between EPG information and the receiving channel" by the user apparatus 3 will be described later with reference to the flowchart in Fig. 10.

The operation section 70 is operated by a user (not shown) and reports various kinds of instructions from the user to the control section 68. That is, the control section 68 performs various kinds of processing by its own determination and can also perform various kinds of processing in accordance with user instructions from the operation section 70.

In the foregoing, an example of the functional configuration of each of the broadcast station apparatus 1, the EPG service provider apparatus 2, and the user apparatus 3 has been described with reference to Figs. 4 to 7.

Next, a description is given of a series of processing until the "link between EPG information and the receiving channel" is performed within the processing performed by the information processing system having such functional configuration including the broadcast station apparatus 1, the EPG service provider apparatus 2, and the user apparatus 3 in Fig. 1.

As described above, when the "link between EPG information and the receiving channel" is performed, the first broadcast station specifying part contained in the EPG information is compared with the second broadcast station specifying part contained in the teletext signal (hereinafter referred to as a "received signal" as appropriate) in the broadcast waves received by the receiving channel. That is, in this case, the first and second broadcast station specifying parts, as described above, become first half parts excluding the time information of the time and date within the header part of the teletext signal. Therefore, in the following, in order to clearly distinguish between the header part (the first half part) of the teletext signal contained in the EPG information and the header part (the first half part) of the teletext signal, which is a received signal, the former is referred to as the "header part header of the EPG information" and the latter is referred to as the "header part packet of the received signal".

In this case, it is necessary for the user apparatus 3 to perform a direct process for performing such "link between EPG information and the receiving channel" (hereinafter referred to as a "linking process") and also to perform an indirect process as described below.

That is, in addition to the "linking process" by the user apparatus 3, a series of processing is necessary in which the EPG service provider apparatus 2 generates EPG information containing the header part header, the broadcast station apparatus 1 transmits a teletext signal containing the EPG information as broadcast waves, and the user apparatus 3 extracts the EPG information from the broadcast waves and stores it. Hereinafter, such a series of processing will be referred to as an "EPG-related processing".

Such an "EPG-related processing" and such a "linking process" are processes independent of each other. Although the details will be described later, the "EPG-related processing" is sometimes performed before the "linking process" and is sometimes performed in the middle of the processing of the "linking process".

An example of such an "EPG-related processing" is shown in the flowcharts in Figs. 8 and 9. An example of such a "linking process" is shown in the flowchart in Fig. 10.

In the following, with reference to the corresponding figure among Figs. 8 to 10, each example of the "EPG-related processing" and the "linking process" will now be described individually in this order.

First, an example of the "EPG-related processing" will be described with reference to the flowcharts in Figs. 8 and 9.

In Figs. 8 and 9, the flowcharts of the "EPG-related processing" of the EPG service provider apparatus 2, the "EPG-related processing" of the broadcast station apparatus 1, and the "EPG-related processing" of the user apparatus 3 are shown in sequence from the left in the figures. The arrow drawn from one predetermined flowchart among the three flowcharts to another flowchart indicates a predetermined information flow.

In step S21 of Fig. 8, the broadcast wave generation and output section 37 of the broadcast station apparatus 1 in Fig. 4 transmits broadcast waves.

Of course, the broadcast waves transmitted in step S21 can also be received by the user apparatus 3. However, if the EPG information is not yet contained in the broadcast waves transmitted in step S21, the broadcast waves are broadcast waves that are not particularly needed to be received for the user apparatus 3 as far as the execution of the "EPG-related processing" is concerned. Accordingly, in the following, for the sake of simplicity of the description, it is assumed that the broadcast waves transmitted in step S21 are received by only the EPG service provider apparatus 2.

That is, in step S11, the tuner section 42 of the EPG service provider apparatus 2 in Fig. 5 receives the broadcast waves transmitted from the broadcast station apparatus 1 in step S21 via the antenna section 41.

A video signal and an audio signal are demodulated from the broadcast waves by the tuner section 42. When at least the video signal is supplied from the tuner section 42 to the teletext extraction section 43, the process proceeds to step S12.

In step S12, the teletext extraction section 43 extracts a teletext signal from the supplied video signal. Furthermore, in step S13, the teletext extraction section 43 extracts the header part of the teletext signal.

In step S14, the teletext extraction section 43 deletes the date and time parts (time information) within the header part of the extracted teletext signal. In other words, in step S14, the teletext extraction section 43 extracts the first half part excluding the time information within the header part of the extracted teletext signal, that is, the pattern character string part.

When the header part of the teletext signal in which the date and time parts are deleted is supplied from the teletext extraction section 43 to the EPG information construction section 45, the process proceeds to step S15.

In step S15, the EPG information construction section 45 constructs EPG information containing the header part of the supplied teletext signal. That is, for example, the above-described EPG information of the structure of Fig. 6 is constructed.

When the EPG information is supplied from the EPG information construction section 45 to the EPG data stream generation section 46, the process proceeds to step S16.

In step S16, the EPG data stream generation section 46 generates an EPG data stream from the supplied EPG information, and the EPG data stream output section 47 transmits the generated EPG data stream to the broadcast station apparatus 1. This completes the "EPG-related processing" of the EPG service provider apparatus 2.

In this manner, in the EPG data stream (EPG information) output from the EPG service provider apparatus 2 in step S16, the first half part excluding the time information within the header part of the teletext signal is contained as the broadcast station specifying information of the broadcast station apparatus 1. In other words, in the EPG data stream (EPG information) output from the EPG service provider apparatus 2 in step S16, the header part header of the teletext signal in which the date and time parts are deleted is contained as the broadcast station specifying information of the broadcast station apparatus 1.

When the EPG data stream is output from the EPG service provider apparatus 2, in step S22, the EPG data stream obtaining section 31 of the broadcast station apparatus 1 in Fig. 4 receives the EPG data stream.

When the EPG data stream is supplied from the EPG data stream obtaining section 31 to the EPG data stream superposition section 33, the process proceeds to step S23 of Fig. 9.

In step S23, the EPG data stream superposition section 33 allows the EPG data stream supplied from the EPG data stream obtaining section 31 to be contained in the teletext signal supplied from the teletext signal obtaining section 32.

When the teletext signal containing the EPG data stream is supplied from the EPG data stream superposition section 33 to the teletext signal insertion section 36, the process proceeds to step S24.

In step S24, the teletext signal insertion section 36 superposes the teletext signal supplied from the EPG data stream superposition section 33 onto the video signal supplied from the video signal obtaining section 34.

When the video signal onto which the teletext signal is superposed is supplied from the teletext signal insertion section 36 to the broadcast wave generation and output section 37, the process proceeds to step S25.

In step S25, the broadcast wave generation and output section 37 generates broadcast waves composed of a video signal supplied from the teletext signal insertion section 36 and an audio signal supplied from the audio signal obtaining section 35, and transmits the broadcast waves. This completes the "EPG-related processing" of the broadcast station apparatus 1.

In this manner, in the broadcast waves transmitted from the broadcast station apparatus 1 in step S25, the first half part excluding the time information within the header part of the teletext signal is contained as the broadcast station specifying information of the broadcast station apparatus 1. In other words, in the broadcast waves transmitted from the broadcast station apparatus 1 in step S25, the header part header of the teletext signal in which the date and time parts are deleted is contained as the broadcast station specifying information of the broadcast station apparatus 1.

Of course, the broadcast waves transmitted in step S25 can also be received by the EPG service provider apparatus 2. However, at this point in step S25, the "EPG-related processing" of the EPG service provider apparatus 2 is completed, and the EPG service provider apparatus 2 does not particularly need to receive the broadcast waves. Accordingly, for the sake of simplicity of description, it is assumed that the broadcast waves transmitted in step S25 are received by only the user apparatus 3.

That is, in step S31, the tuner section 62 of the user apparatus 3 in Fig. 7 receives the broadcast waves transmitted from the broadcast station apparatus 1 in step S25 via the antenna section 61, and separates the broadcast waves into a video signal and an audio signal.

When the video signal is supplied from the tuner section 62 to the teletext extraction section 67, the process proceeds to step S32.

In step S32, the teletext extraction section 67 extracts a teletext signal from the supplied video signal.

When the teletext signal is supplied from the teletext extraction section 67 to the control section 68, the process proceeds to step S33.

In step S33, the control section 68 extracts EPG information from the supplied teletext signal.

In step S34, the control section 68 allows the EPG information to be stored in the EPG information storage section 69. This completes the "EPG-related processing" of the user apparatus 3.

In this manner, in the EPG information stored in the user apparatus 3 in step S34, the first half part excluding the time information within the header part of the teletext signal is contained as the broadcast station specifying information of the broadcast station apparatus 1. In other words, in the EPG information stored in the user apparatus 3 in step S34, the header part header of the teletext signal in which the date and time parts are deleted is contained as the broadcast station specifying information of the broadcast station apparatus 1.

In the foregoing, an example of the "EPG-related processing" has been described with reference to the flowcharts in Figs. 8 and 9.

In the example of Fig. 1, since only one broadcast station apparatus 1 is included in the information processing system, the "EPG-related processing" is performed only once, and as a result, only the EPG information containing the broadcast station specifying information of the broadcast station apparatus 1 is stored in the user apparatus 3. That is, only the EPG information indicating a broadcast station that manages the broadcast station apparatus 1 is stored in the user apparatus 3.

However, in practice, there are many cases in which a plurality of broadcast station apparatuses are included in the information processing system. That is, often, a plurality of broadcast stations that transmit broadcast waves that can be received by the user apparatus 3 exist. In such a case, the "EPG-related processing" is performed for each broadcast station, with the result that EPG information containing each piece of the broadcast station specifying information of each broadcast station is stored in each user apparatus 3. That is, a plurality of pieces of the EPG information indicating a plurality of corresponding broadcast stations are stored in the user apparatus 3.

Next, a description will be given, with reference to the flowchart in Fig. 10, of an example of the "linking process" of the user apparatus 3 of Fig. 7.

In step S51, the user apparatus 3 determines whether or not the above-described "EPG-related processing" of Figs. 8 and 9 has already been performed.

When it is determined in step S51 that the "EPG-related processing" has not yet been performed, that is, when the EPG information is not stored in the EPG information storage section 69, the user apparatus 3 performs the "EPG-related processing" in step S52 and thereafter, the process proceeds to step S53.

That is, as described above, when the "link between EPG information and the receiving channel" is performed, in addition to this "linking process", the "EPG-related processing" is further needed to be performed. Therefore, for example, when the "EPG-related processing" is not yet performed at this point in which the "linking process" is started, it is determined to be NO in step S51, the "EPG-related processing" is performed in step S52, and thereafter, the process proceeds to step S53.

In contrast, when the "EPG-related processing" is already performed at the point of starting this "linking process", it is determined to be YES in step S51, the "EPG-related processing" of step S52 is not particularly performed, and the process directly proceeds to step S53.

In step S53, the tuner section 62 of the user apparatus 3 receives the broadcast waves of a predetermined channel via the antenna section 61 and separates them into a video signal and an audio signal.

The broadcast waves received in step S53 are broadcast waves from the broadcast station apparatus 1 in the example Fig. 1. However, as described above, at the point immediately after the processing in step S53, the user apparatus 3 is not able to specify the transmission source of the broadcast waves received by the receiving channel, that is, the broadcast station to which the receiving channel is assigned. That is, at the point in step S53, the correspondence between the receiving channel and the broadcast station is not yet made. Therefore, the user apparatus 3 performs processing of the next step S54 and subsequent steps in order to make a correspondence between the receiving channel and the broadcast station.

That is, when the video signal is supplied from the tuner section 62 to the teletext extraction section 67, the process proceeds to step S54.

In step S54, the teletext extraction section 67 extracts a teletext signal (received signal) from the supplied video signal.

When the teletext signal is supplied from the teletext extraction section 67 to the control section 68, the process proceeds to step S55.

In step S55, the control section 68 determines whether or not CNI is contained in the teletext signal.

When it is determined in step S55 that CNI is contained in the teletext signal, the process proceeds to step S56.

In step S56, the control section 68 performs the "link between EPG information and the receiving channel" by using CNI. That is, in step S56, the "link between EPG information and the receiving channel" of the related art is performed. This completes the "linking process" of the user apparatus 3.

In contrast, when CNI is not contained in the teletext signal (received signal), the execution of the "link between EPG information and the receiving channel" of the related art using CNI may be impossible. Therefore, in such a case, it is determined to be NO in step S55, and the process proceeds to step S57.

In step S57, the control section 68 extracts the broadcast station specifying information contained in the teletext signal (received signal), that is, the above-described header part packet of the received signal.

In step S58, the control section 68 obtains one predetermined piece of the EPG information from the EPG information storage section 69, and extracts the broadcast station specifying information contained in the EPG information, that is, the above-described header part header of the EPG information.

Then, in step S59, the control section 68 compares the header part packet of the received signal with the header part header of the EPG information. More accurately, in step S59, the first half part excluding the time information within the header part packet of the received signal is compared with the header part header of the EPG information in which the time information is already deleted.

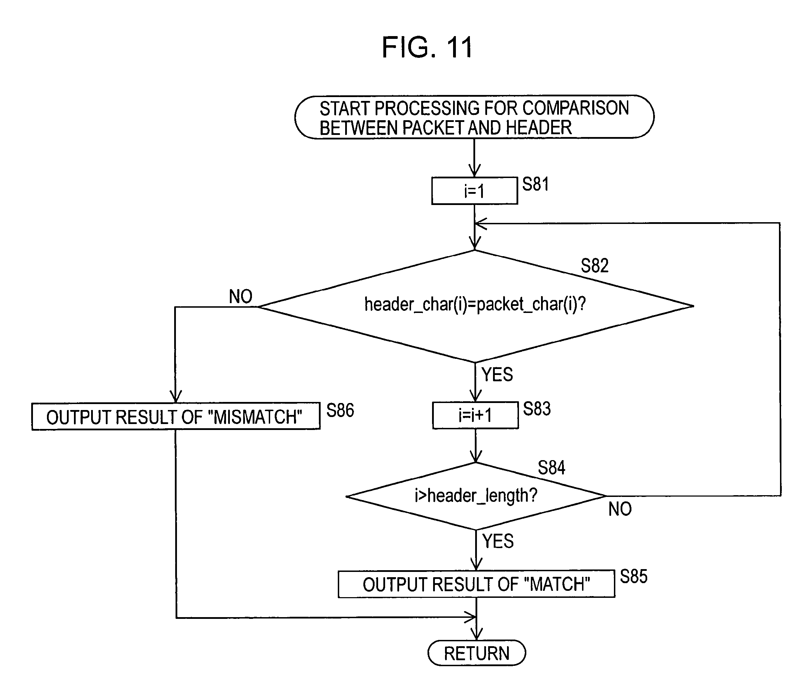

Hereinafter, such a process of step S59 will be referred to as a "process of comparison between a packet and a header". A detailed example of the "process of comparison between a packet and a header" will be described later with reference to the flowchart in Fig. 11.

In step S60, the control section 68 determines whether or not a result of "match" is output as the result of the "process of comparison between a packet and a header" in the immediately previous step S59.

When the result of a "mismatch" is output as the result of the "process of comparison between a packet and a header" in the immediately previous step S59, that is, when the header part packet of the received signal differs from the header part header of the EPG information, this means that the broadcast station to which the receiving channel is assigned differs from the broadcast station indicated by the EPG information containing the header part header. Therefore, in such a case, it is determined to be NO in step S60, the process returns to step S58, and processing of step S58 and subsequent steps is repeated. That is, in step S58, the EPG information differing from that thus far is extracted, and the header part header of the EPG information is extracted. Then, in the "process of comparison between a packet and a header" in step S59, the header part header of the EPG information is compared with the header part packet of the received signal.

Such loop processing of steps S58 to S60 is repeatedly performed until the result of a "match" is output as the result of the "process of comparison between a packet and a header" in step S59.

There can be a case in which the result of a "mismatch" is output as all the results of the "process of comparison between a packet and a header" in step S59 with respect to all the EPG information stored in the EPG information storage section 69. That is, there can be a case in which not even one piece of the EPG information containing the header part header matching the header part packet of the received signal is stored in the EPG information storage section 69. In such a case, although not shown, for example, the user apparatus 3 should obtain new EPG information by performing the "EPG-related processing" of Figs. 8 and 9 again and should perform the loop processing of steps S58 to S60.

In the middle of the loop processing of steps S58 to S60, when the result of a "match" is output as the result of the "process of comparison between a packet and a header" with respect to particular EPG information in step S59, it is determined to be YES in the next step S60, and the process proceeds to step S61.

In step S61, the control section 63 performs the "link between EPG information and the receiving channel" with respect to the EPG information containing the same header part header as the header part packet of the received signal and the receiving channel of the received signal (broadcast waves).

This completes the "linking process" of the user apparatus 3.

A description will now be given, with reference to the flowchart in Fig. 11, of a detailed example of the "process of comparison between a packet and a header" in step S59.

In step S81, the control section 63 initializes a character sequence i to 1 (i = 1).

In step S82, the control section 63 determines whether or not header_chair = packet_chair(i). Header_chair(i) refers to the i-th character from the beginning within the header part header of the EPG information. Packet_chair(i) refers to the i-th character from the beginning within the header part packet of the received signal. That is, step S82 is a process for determining whether or not the i-th character from the beginning within the header part header of the EPG information matches the i-th character from the beginning within the header part packet of the received signal.

When it is determined in step S82 that header_chair(i) ≠packet_chair(i), that is, when the i-th character from the beginning within the header part header of the EPG information does not match the i-th character from the beginning within the header part packet of the received signal, the process proceeds to step S86.

In step S86, the control section 63 outputs the result of a "mismatch". This completes the "process of comparison between a packet and a header" in step S59 of Fig. 10, and the process proceeds to step S60. That is, in this case, it is determined to be NO in step S60, the process returns to step S58, and the processing of step S58 and subsequent steps is repeated.

In contrast, when it is determined in step S82 that header_chair (i) = packet_chair(i), that is, when the i-th character from the beginning within the header part header of the EPG information matches the i-th character from the beginning within the header part packet of the received signal, the process proceeds to step S83.

In step S83, the control section 63 increments the character sequence i by 1 (i = i + 1).

In step S84, the control section 63 determines whether or not i > header_length. Header_length indicates the length (the number of characters) of the character string of the header part header of the EPG information as described above as the structure of the EPG information in the example of Fig. 6.

That is, it is suffice for the control section 63 to confirm that the first half part excluding the time information within the header part packet of the received signal, that is, the pattern character string part, matches the header part header of the EPG information. For this reason, it is determined to be NO in step S84 until i exceeds header_length, the process returns to step S82, and the processing of step S82 and subsequent steps is repeated. That is, the header part header of the EPG information and the header part packet of the received signal are compared with each other in sequence in one character units from the beginning up to the header_length-th character.

If even one character that differs is found in the comparison between the header part header of the EPG information and the header part packet of the received signal from the beginning up to the header_length-th character, it is immediately determined to be NO in step S82 at that point, and in step S86, the result of a "mismatch" is output.

In contrast, in the comparison between the header part header of the EPG information and the header part packet of the received signal, when all the characters from the beginning up to the header_length-th character match, it is determined to be YES in step S84 after i = header_length + 1 is reached, and the process proceeds to step S85.

In step S85, the control section 63 outputs the result of a "match". This completes the "process of comparison between a packet and a header" in step S59 of Fig. 10, and the process proceeds to step S60. That is, in this case, it is determined to be YES in step S60, and the process further proceeds to step S61.

In the foregoing, the "linking process" of the user apparatus 3 has been described with reference to the flowcharts in Figs. 10 and 11.

In the example of Fig. 1, since one broadcast station apparatus 1 is included in the information processing system, the "linking process" is performed only once, with the result that only the "link between EPG information and the receiving channel" with respect to the broadcast station apparatus 1 is performed.

However, in practice, often, the information processing system includes a plurality of broadcast station apparatuses. That is, there are many broadcast stations that transmit broadcast waves that can be received by the user apparatus. In such a case, the "linking process" is performed for each broadcast station. In this case, the channel assigned to each broadcast station is set to the receiving channel in sequence, and the "link between EPG information and the receiving channel" with respect to each broadcast station is performed in sequence.

For example, when the user apparatus 3 can set broadcast stations of N channels (N is any integer value), that is, when N points are provided in advance for the user apparatus 3 and one predetermined channel can be assigned to each of the N points, the "linking process" is performed with respect to each of the N points. In this case, the channel assigned to each broadcast station is set in sequence at each of the N points, each of the N points is set in sequence at a receiving channel, and the "link between EPG information and the receiving channel" with respect to each of the N points is performed in sequence.

The execution timing of the "linking process" with respect to each of the N points is not particularly limited, and the "linking process" may be performed at any timing. More specifically, for example, when a user uses the user apparatus 3 for the first time, the starting of the "linking process" may be instructed by operating the operation section 70 as a part of the installing operation. Furthermore, in Europe, the configuration of the broadcast station is often changed, and therefore, the user apparatus 3 may automatically start the "linking process" by its own determination each time a predetermined period passes.

In the foregoing, the "EPG-related processing" and the "linking process" by the information processing system of Fig. 1 have been described with reference to Figs. 8 to 11.

The information processing system of Fig. 1 becomes possible to reliably perform the "link between EPG information and the receiving channel" with respect to also a broadcast station that does not transmit CNI by performing such an "EPG-related processing" and such a "linking process". That is, it becomes possible to solve the above-described problems of the related art.

For the broadcast station specifying information used in the "EPG-related processing" and the "linking process", in the example of Figs. 8 to 11, the first half part excluding the time information within the header part of the teletext signal, that is, the pattern character string part, is used. Alternatively, as described above, the broadcast station specifying information is not limited to such a pattern character string part, and any information may be used.

More specifically, even when the information processing system of Fig. 1 is used in an area other than Europe, any information capable of specifying a broadcast station that manages the broadcast station apparatus 1 within the broadcast data transmitted from the broadcast station apparatus 1 can be used as the broadcast station specifying information. Also, in this case, of course, the information processing system of Fig. 1 is able to perform the "EPG-related processing" and the "linking process" in a similar manner. Therefore, also in this case, it is possible to reliably perform the "link between EPG information and the receiving channel". That is, it is possible to solve the above-described of the related art.

In addition, in the above-described examples, the broadcast data and the broadcast program (video signals and audio signals) to be transmitted from the broadcast station apparatus 1 are transmitted wirelessly as broadcast waves. However, the transmission form is not particularly limited to the above-described examples. Wire transmission may be adopted, or a combination of wire and wireless transmissions may be adopted. In this case, the transmission may go through one or more predetermined networks or may not go through a network.

Although the series of the above-described processes can be performed by hardware, it can also be performed by software.

In this case, each apparatus constituting the information processing system of Fig. 1, that is, each of the broadcast station apparatus 1, the EPG service provider apparatus 2, and the user apparatus 3 can be constructed by, for example, a computer shown in Fig. 12.

In Fig. 12, a CPU (Central Processing Unit) 101 performs various kinds of processing in accordance with a program recorded on a ROM (Read Only Memory) 102 or a program that is loaded from a storage section 108 into a RAM (Random Access Memory) 103. In the RAM 103, data necessary for the CPU 101 to perform various kinds of processing is also stored as appropriate.

The CPU 101, the ROM 102, and the RAM 103 are interconnected to one another via a bus 104. Furthermore, an input/output interface 105 is connected to the bus 104.

An input section 106 including a keyboard, a mouse, etc.; an output section 107 including a display device, a speaker, etc.,; a storage section 108 including a hard disk, etc.; and a communication section 109 are connected to the input/output interface 105. The communication section 109 is constructed, for example, by a combination of a modem, a terminal adaptor, an antenna section, and a tuner section, or by a combination of an antenna section and a broadcast wave generation and output section. The communication section 109 performs a communication process with other apparatuses via a network (including the network 4 of Fig. 1) including the Internet. Furthermore, the communication section 109 can transmit and receive broadcast waves as necessary.

A drive 110 is connected to the input/output interface 105 as necessary. A removable recording medium 111 formed of a magnetic disk, an optical disc, a magneto-optical disc, or a semiconductor memory is loaded into the drive 110 as appropriate. A computer program read from the removable recording medium 111 is installed into the storage section 108 as necessary.

When the series of processes is to be performed by software, a program forming the software is installed from a network or a recording medium into a computer incorporated into specialized hardware or into, for example, a general-purpose personal computer capable of executing various functions by installing various programs.

As shown in Fig. 12, separately from the main unit of the apparatus, the recording medium containing such a program is formed of a removable recording medium 111 (packaged medium) composed of a magnetic disk (including a floppy disk), an optical disk (including a CD-ROM (Compact Disk-Read Only Memory) or a DVD (Digital Versatile Disk)), a magneto-optical disk (including an MD (Mini-Disk)), or a semiconductor memory on which a program is recorded, the recording medium being distributed to provide a program to a user. In addition, the recording medium is formed of the RAM 103 or a hard disk contained in the storage section 108 in which a program is recorded, which is provided to the user by being incorporated in advance into the main unit of the apparatus.

In this specification, the steps describing the program include not only processes which are carried out chronologically in the written order, but also processes which are executed concurrently or individually although these are not necessarily processed chronologically.

In this specification, the system represents the overall apparatus formed of a plurality of devices.

It should be understood by those skilled in the art that various modifications, combinations, sub-combinations and alterations may occur depending on design requirements and other factors insofar as they are within the scope of the appended claims or the equivalents thereof.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An information processing system comprising:
a first information processing apparatus for transmitting a broadcast program and broadcast data;
a second information processing apparatus for generating and outputting electronic program guide (EPG) information about the broadcast program transmitted from the first information processing apparatus; and
a third information processing apparatus for performing processing that uses at least one of the broadcast program, the broadcast data, the broadcast program and the broadcast data being transmitted from the first information processing apparatus, and the EPG information output from the second information processing apparatus,
wherein the second information processing apparatus includes
first extraction means for extracting, from within first broadcast data transmitted from the first information processing apparatus, first part data capable of specifying a first broadcast station for managing the first information processing apparatus;
EPG information generation means for generating the EPG information containing the first part data extracted by the first extraction means; and
output means for outputting the EPG information generated by the EPG information generation means, and
the third information processing apparatus includes
storage means for storing the EPG information output from the second information processing apparatus;
receiving means for receiving second broadcast data transmitted using a predetermined channel;
second extraction means for extracting, from within the second broadcast data received by the receiving means, second part data capable of specifying a second broadcast station that has transmitted the second broadcast data; and
specifying means for specifying whether or not the second broadcast station to which the channel used to transmit the second broadcast data is assigned is the first broadcast station corresponding to the EPG information by comparing the second part data extracted by the second extraction means with the first part data contained in the EPG information stored in the storage means.

2. An information processing method for use with an information processing system including a first information processing apparatus for transmitting a broadcast program and broadcast data; a second information processing apparatus for generating and outputting EPG information about the broadcast program transmitted from the first information processing apparatus; and a third information processing apparatus for performing processing that uses at least one of the broadcast program, the broadcast data, the broadcast program and the broadcast data being transmitted from the first information processing apparatus, and the EPG information output from the second information processing apparatus, the information processing method comprising the steps of:
extracting by the second information processing apparatus, from within first broadcast data transmitted from the first information processing apparatus, first part data capable of specifying a first broadcast station for managing the first information processing apparatus;
generating and outputting by the second information processing apparatus the EPG information containing the extracted first part data;
storing by the third information processing apparatus the EPG information output from the second information processing apparatus;
receiving by the third information processing apparatus second broadcast data transmitted using a predetermined channel;
extracting by the third information processing apparatus, from within the received second broadcast data, second part data capable of specifying a second broadcast station that has transmitted the second broadcast data; and
specifying by the third information processing apparatus whether or not the second broadcast station to which the channel used to transmit the second broadcast data is assigned is the first broadcast station corresponding to the EPG information by comparing the second extracted part data with the first part data contained in the stored EPG information.

3. An information processing apparatus for transmitting a broadcast program and broadcast data, the information processing apparatus comprising:
obtaining means for obtaining EPG information that is EPG information about the broadcast program transmitted from the information processing apparatus and that contains part data within the broadcast data, the part data capable of specifying a broadcast station for managing the information processing apparatus;
superposition means for superposing the EPG information obtained by the obtaining means onto the broadcast program or the broadcast data; and
transmission means for transmitting each of the broadcast program, the broadcast data, and the EPG information superposed onto the broadcast program or the broadcast data by the superposition means.

4. The information processing apparatus according to Claim 3, wherein the broadcast data is teletext data, and the part data within the broadcast data is a part excluding time information within the header part of the teletext data.

5. An information processing method for use with an information processing apparatus for transmitting a broadcast program and broadcast data, the information processing method comprising the steps of:
obtaining EPG information that is EPG information about the broadcast program transmitted from the information processing apparatus and that contains part data within the broadcast data, the part data capable of specifying a broadcast station for managing the information processing apparatus;
superposing the EPG information obtained in the obtaining step onto the broadcast program or the broadcast data; and
controlling that the information processing apparatus transmits each of the broadcast program, the broadcast data, and the EPG information superposed onto the broadcast program or the broadcast data in the superposition step.

6. A program to be executed by a computer for controlling a transmission apparatus for transmitting a broadcast program and broadcast data, the program comprising the steps of:
obtaining EPG information that is EPG information about the broadcast program transmitted from the transmission apparatus and that contains part data within the broadcast data, the part data capable of specifying a broadcast station for managing the transmission apparatus;
superposing the EPG information obtained in the obtaining step onto the broadcast program or the broadcast data; and
controlling that the transmission apparatus transmits each of the broadcast program, the broadcast data, and the EPG information superposed onto the broadcast program or the broadcast data in the superposition step.

7. An information processing apparatus for generating and outputting EPG information about a broadcast program transmitted from a predetermined broadcast station, the information processing apparatus comprising:
extraction means for extracting part data capable of specifying the broadcast station from within broadcast data transmitted from the broadcast station;
EPG information generation means for generating EPG information containing the part data extracted by the extraction means; and
output means for outputting the EPG information generated by the EPG information generation means.

8. The information processing apparatus according to Claim 7, wherein the broadcast data is teletext data, and
the part data within the broadcast data is a part excluding time information within the header part of the teletext data.

9. An information processing method for use with an information processing apparatus for generating and outputting EPG information about a broadcast program transmitted from a predetermined broadcast station, the information processing method comprising the steps of:
extracting part data capable of specifying the broadcast station from within broadcast data transmitted from the broadcast station;
generating the EPG information containing the part data extracted in the extraction step; and
controlling that the information processing apparatus outputs the EPG information generated in the EPG information generation step.

10. A program to be executed by a computer for controlling an EPG processing apparatus for generating and outputting EPG information about a broadcast program transmitted from a predetermined broadcast station, the program comprising the steps of:
extracting part data capable of specifying the broadcast station from within broadcast data transmitted from the broadcast station;
generating EPG information containing the part data extracted in the extraction step; and
controlling that the EPG processing apparatus outputs the EPG information generated in the EPG information generation step.

11. An information processing apparatus comprising:
storage means for storing EPG information that is EPG information about a broadcast program broadcast from a first broadcast station and that contains first part data within first broadcast data broadcast from the first broadcast station, the first part data capable of specifying the first broadcast station;
receiving means for receiving second broadcast data transmitted using a predetermined channel;
extraction means for extracting, from within the second broadcast data received by the receiving means, second part data capable of specifying a second broadcast station that has transmitted the second broadcast data; and
specifying means for specifying whether or not the second broadcast station to which the channel used to transmit the second broadcast data is assigned is the first broadcast station corresponding to the EPG information by comparing the second part data extracted by the second extraction means with the first part data contained in the EPG information stored in the storage means.

12. The information processing apparatus according to Claim 11, wherein the first broadcast data and the second broadcast data are teletext data, and
the first part data within the first broadcast data and the second part data within the second broadcast data are parts excluding time information within the header part of the teletext data.

13. An information processing method for use with an information processing apparatus including at least storage means and receiving means, the information processing method comprising the steps of:
controlling the storage means so as to store EPG information that is EPG information about a broadcast program broadcast from a first broadcast station and that contains first part data within first broadcast data broadcast from the first broadcast station, the first part data capable of specifying the first broadcast station;
controlling the receiving means so as to receive second broadcast data transmitted using a predetermined channel;
extracting, from within the second broadcast data received by the receiving means in the reception controlling step, second part data capable of specifying a second broadcast station that has transmitted the second broadcast data; and
specifying whether or not the second broadcast station to which the channel used to transmit the second broadcast data is assigned is the first broadcast station corresponding to the EPG information by comparing the second part data extracted in the extraction step with the first part data contained in the EPG information stored in the storage means in the storage controlling step.

14. A program to be executed by a computer for controlling a receiving apparatus including at least storage means and receiving means, the program comprising the steps of:
controlling the storage means so as to store EPG information that is EPG information about a broadcast program broadcast from a first broadcast station and that contains first part data within first broadcast data broadcast from the first broadcast station, the first part data capable of specifying the first broadcast station;
controlling the receiving means so as to receive second broadcast data transmitted using a predetermined channel;
extracting, from within the second broadcast data received by the receiving means in the reception controlling step, second part data capable of specifying a second broadcast station that has transmitted the second broadcast data; and
specifying whether or not the second broadcast station to which the channel used to transmit the second broadcast data is assigned is the first broadcast station corresponding to the EPG information by comparing the second part data extracted in the extraction step with the first part data contained in the EPG information stored in the storage means in the storage controlling step.

15. An information processing apparatus for transmitting a broadcast program and broadcast data, the information processing apparatus comprising:
an obtaining section obtaining EPG information that is EPG information about the broadcast program transmitted from the information processing apparatus and that contains part data within the broadcast data, the part data capable of specifying a broadcast station for managing the information processing apparatus;
a superposition section superposing the EPG information obtained by the obtaining section onto the broadcast program or the broadcast data; and
a transmission section transmitting each of the broadcast program, the broadcast data, and the EPG information superposed onto the broadcast program or the broadcast data by the superposition section.

16. An information processing apparatus for generating and outputting EPG information about a broadcast program transmitted from a predetermined broadcast station, the information processing apparatus comprising:
an extraction section extracting part data capable of specifying the broadcast station from within broadcast data transmitted from the broadcast station;
an EPG information generation section generating EPG information containing the part data extracted by the extraction section; and
an output section outputting the EPG information generated by the EPG information generation section.

17. An information processing apparatus comprising:
a storage section storing EPG information that is EPG information about a broadcast program broadcast from a first broadcast station and that contains first part data within first broadcast data broadcast from the first broadcast station, the first part data capable of specifying the first broadcast station;
a receiving section receiving second broadcast data transmitted using a predetermined channel;
an extraction section extracting, from within the second broadcast data received by the receiving section, second part data capable of specifying a second broadcast station that has transmitted the second broadcast data; and
a specifying section specifying whether or not the second broadcast station to which the channel used to transmit the second broadcast data is assigned is the first broadcast station corresponding to the EPG information by comparing the second part data extracted by the second extraction section with the first part data contained in the EPG information stored in the storage section.
